# EUROPEAN PATENT APPLICATION

(11) **EP 4 628 519 A1**
(43) Date of publication of application: **08.10.2025**
(21) Application number: 24168749.0
(22) Date of filing: 05.04.2024
(51) Int. Cl.: C08G 18/16, C08G 18/22, C08G 18/32, C08G 18/34, C08G 18/42, C08G 18/66, C08G 18/75, C08G 18/76, C08G 18/08

(54) **ORGANOGERMANIUM(IV) CARBOXYLATES AND MIXTURES OF GERMANIUM CARBOXYLATES WITH ORGANIC ACID ANHYDRIDES AS CATALYSTS**

(71) Applicant: Technische Universität Graz, 8010 Graz (AT)
(72) Inventor: Garstenauer, Christoph, 8010 Graz (AT); Uhlig, Frank, 8051 Graz (AT)
(74) Representative: Patentanwaltskanzlei Matschnig & Forsthuber OG

(57) **Abstract**

The invention relates to novel compositions comprising at least one organogermanium(IV) carboxylate and at least one organic acid anhydride for use as catalysts in catalyzing various chemical reactions. The invention also relates to novel organogermanium(IV) tricarboxylate compounds for use as catalysts in catalyzing chemical reactions and methods for synthesizing such compounds. The invention further relates to the use of said compositions and compounds and to methods for synthesizing polyurethane by using said compositions and compounds as a catalytic component. The invention also relates to catalytic systems for use in catalyzing chemical reactions, wherein the catalytic systems comprise said compositions and/or compounds according to the invention.

## Description

### Field of the Invention

The invention relates to novel compositions comprising at least one organogermanium(IV) carboxylate and at least one organic acid anhydride for use as catalysts in catalyzing various chemical reactions. The invention also relates to novel organogermanium(IV) tricarboxylate compounds for use as catalysts in catalyzing chemical reactions and methods for synthesizing such compounds. The invention further relates to the use of said compositions and compounds and to methods for synthesizing polyurethane by using said compositions and compounds as a catalytic component. The invention also relates to catalytic systems for use in catalyzing chemical reactions, wherein the catalytic systems comprise said compositions and/or compounds according to the invention.

### Background

For more than 50 years organotin catalysts have been widely used in different fields of applications in material and polymer chemistry, e.g. as catalyst in polyurethane synthesis, transurethanisation, polyester synthesis, transesterification, sol gel and silyl ether exchange reactions. Prominent examples are DBTL (dibutyltin dilaurate) and DBTA (dibutyltin diacetate). The main application of DBTL is the use in polyurethane chemistry. The biggest disadvantage of organotin catalysts is the leach out in the environment and their direct relations to environmental problems. In the European Commission Decision 2009/425/EC, organotin compounds were classified as a risk to human health, especially with regard to reproduction and mutagenesis. Therefore, in 2010 organotin compounds, were restricted as catalysts in the synthesis of various polymers for consumer products (e.g. in the synthesis of polyurethanes).

Current alternatives to organotin catalysts are ternary amine catalysts which are often classified as "volatile organic compounds" (VOC) giving rise to toxicological and legal problems. Furthermore, many ternary amine catalysts lack satisfactory catalytic activity. Moreover, their promotion of side reactions is another significant disadvantage.

Germanium(IV) carboxylates and their synthesis are known from the literature [1].

Ge(OAc)₄ is known as a catalyst in the field of transesterification. For example, the recycling of polyethylene terephthalate (PET) *via* Ge(OAc)₄ catalysis in transesterification has been described earlier [2].

The replacement of organotin catalysts or ternary amine catalysts with (organo)germanium(IV) catalysts has been described earlier in the designated inventor's master thesis [3]. In this master thesis, the catalytic activity of the germanium(IV) dicarboxylates Et₂Ge(OAc)₂ and Ph₂Ge(OAc)₂ in the urethane formation was investigated. The acceleration in relation to the reaction without catalyst was described with 3.6 times. This factor is in relation to an industrial application not high enough to be useful in or suitable for an industrial application and, thus, needs an improvement.

There is a constant need for alternative and improved catalysts which are not considered toxic or environmentally toxic, which are not legally limited like the typical tin catalysts and which are not classified as "volatile organic compound" (VOC) like typical amine catalysts. Thus, there is an increasing demand for improved catalysts that are capable of replacing the various problematic catalysts on the market, can be recycled and are applicable in numerous areas of chemical catalysis.

It is an object of the invention to provide novel catalysts and catalytic systems as alternatives to, or replacement for, organotin and heavy metal catalysts and ternary amine catalysts, wherein the novel catalysts and catalytic systems are useful and effective in catalyzing various chemical reactions, in particular in the synthesis of polyurethanes, but also other areas of chemical catalysis, such as sol gel reaction, ring opening polymerization, and polyurethane degradation (glycolysis).

It is a further object of the present invention to provide novel catalysts and catalytic systems which are not restricted by regulations as it is currently the case with organotin catalysts or heavy metal catalysts.

It is another object of the present invention to provide novel catalysts and catalyst systems which are applicable for heterogeneous and/or homogeneous catalysis, and, in case of heterogeneous catalysis, allow for catalyst recycling.

It is another object of the present invention to provide a novel and straightforward synthetic route for synthesizing germanium(IV) tricarboxylates which avoids the use of toxic heavy metal salts.

### Summary

The above-mentioned objects are met by the present invention which is defined in the appended claims.

### Detailed description of the invention

In the following the present invention and preferred embodiments will be described in more detail. The description of the present invention and preferred embodiments is also accompanied by the experimental data given in the examples below.

Further scope of applicability of the present invention will become more apparent from the detailed description given hereinafter. However, it should be understood that the detailed description and specific examples are given by way of illustration only, since various changes and modifications within the scope of the appended claims will become apparent to those skilled in the art from the detailed description.

In one aspect, the present invention relates to a composition comprising at least one organogermanium(IV) carboxylate and at least one organic acid anhydride, wherein the at least one organogermanium(IV) carboxylate is represented by the following formula (I):

((R₁)ₓ)Ge((OOC-R₂)₄₋ₓ) **(I)**

wherein
the index "x" is 0, 1, 2 or 3;
R₁ is selected from the group consisting of optionally: substituted C1 - C12 alkyl, optionally substituted C2 - C10 alkenyl, optionally substituted C2 - C12 alkinyl, optionally substituted C3 - C12 cycloalkyl, optionally substituted C3 - C12 cycloalkenyl, optionally substituted C5 - C16 aryl, optionally substituted C5 - C15 heteroaryl, optionally substituted 5 to 8 membered heteroaryl, and optionally substituted -(C0-C10)-COOR₃;
R₃ is selected from the group consisting of: hydrogen, optionally substituted C1-C12 alkyl, optionally substituted C2-C12 alkenyl, optionally substituted C2-C12 alkinyl, optionally substituted C3-C12 cycloalkyl, optionally substituted C3-C12 cycloalkenyl, optionally substituted C5 - C16 aryl, optionally substituted C5 - C15 heteroaryl, and optionally substituted 5 to 8 membered heteroaryl;
R₂ is selected from the group consisting of: optionally substituted C1 - C24 alkyl, substituted C1-C24 alkyl, optionally substituted C2 - C24 alkenyl, optionally substituted C2 - C24 alkinyl, optionally substituted C3 - C24 cycloalkyl, optionally substituted C3 - C24 cycloalkenyl, optionally substituted C5 - C16 aryl, optionally substituted C5 - C15 heteroaryl, and optionally substituted 5 to 8 membered heteroaryl.

In another aspect, the present invention relates to a organogermanium(IV) tricarboxylate compound represented by the following formula (III):

(R₄)Ge((OOC-R₅)₃) **(III)**

wherein
R₄ is a substituent comprising an organic acid anhydride moiety;
R₅ is selected from the group consisting of: optionally substituted C1 - C18 alkyl, substituted C1-C12 alkyl, optionally substituted C2 - C12 alkenyl, optionally substituted C2 - C12 alkinyl, optionally substituted C3 - C12 cycloalkyl, optionally substituted C3 - C12 cycloalkenyl, optionally substituted C5 - C16 aryl, optionally substituted C5 - C15 heteroaryl, and optionally substituted 5 to 8 membered heteroaryl.

The invention is based on the surprising finding that a composition comprising at least one organogermanium(IV) carboxylate and at least one organic acid anhydride, or an organogermanium(IV) tricarboxylate compound having a substituent comprising an organic acid anhydride moiety demonstrated excellent catalytic activity and, thus, are useful in or suitable for an industrial application. In addition, the present invention contributes to economic efficiency and resource conservation as it has been demonstrated that less germanium is required in catalysis when an organic acid anhydride is used as a cheap and readily available cocatalyst. Furthermore, the organogermanium-compounds used in the present invention are not considered toxic or environmentally toxic and are not legally limited, and, hence, are a beneficial replacement for various problematic or prohibited catalysts on the market.

The compositions and compounds of the present invention are applicable for heterogeneous and/or homogeneous catalysis, and, in case of heterogeneous catalysis, allow for catalyst recycling. For example, in case of heterogeneous catalysis (e.g. Ge(OAc)₄ in mixtures with carboxylic acid anhydrides), a catalyst recyclability of over 99% was observed.

The present invention also provides a novel and straightforward synthetic route for synthesizing germanium(IV) tricarboxylates which avoids the use of toxic heavy metal salts.

In addition to the main application of the compositions and compounds of the invention, namely, the polyurethane formation, the present invention opens a wide range of applications in chemical catalysis/synthesis, including transurethanisation, esterification, ring-opening esterification and polymerization, transesterification, and siloxane-formation.

The above-identified beneficial technical effects are demonstrated and evidenced by the experimental data given in the experimental chapter below.

### Definitions

The term "alkyl" as used herein refers to straight or branched hydrocarbon chains or chains bearing ring closures having a specified number of carbon atoms. For example, C1-C18 alkyl refers to an alkyl group having at least 1 and at most 18 carbon atoms. Alkyl groups having a straight chain preferably represent C1-C24 alkyl, more preferably C1-C12 alkyl, more preferably C1-C9 alkyl, most preferably C1-C6 alkyl. Useful branched chains, which preferably represent C1-C9 alkyl, are for example isopropyl, isobutyl, *sec*-butyl or *tert*-butyl, 2-ethylbutyl, 3-methylbutyl, 2,2-dimethylpropyl (*neo*-pentyl), 1,1-dimethylpropyl (*tert-*pentyl), 1,2-dimethylpropyl, 2-methylpentyl (*iso*-hexyl), 2,2,4-trimethylpentyl, (*iso*-octyl), and 2,2-dimethylbutyl (*neo*-hexyl). Useful alkyl chains bearing ring closures are cyclopropylethyl, cyclobutylmethyl, cyclobutylpropyl, cyclobutylpentyl, cyclopentylmethyl, cyclopentyl-*iso-*propyl, cyclopentyl-*tert*-butyl, cyclohexylmethyl, cyclohexylethyl, cyclohexylpropyl, cyclohexyl-*iso*-propyl, cyclohexyl-*tert*-butyl, cyclohexyl-*sec*-butyl, cycloheptylmethyl, cyclooctylmethyl, cyclohexyldimethyl, and cyclohexyldi-(*iso*-propyl).

The alkyl chain may be optionally substituted by one or more substituents, each independently being selected from the group consisting of organic functional groups. The organic functional group is preferably selected from the group consisting of carbonyl-, halogen-, ether-, thiol-, nitril-, *tert*-amine-, epoxide-, sulfoxide-, sulfone-, cyanate-, isocyanate-, thiocyanate-, isothiocyanate-, and imine groups. More preferably, the organic functional group is selected from the group consisting of carbonyl-, halogen-, ether-, and nitril groups. The carbonyl groups are preferably selected from the group consisting of carboxylic anhydrides and carboxylic esters.

For R₁ alkyl chains representative, non-delimiting examples for preferred substituents are carbonyl-, halogen-, ether-, and nitril groups. Preferably the carbonyl groups are selected from the group consisting of carboxylic anhydrides and carboxylic esters. The preferred carboxylic anhydride is propionic acetic anhydride (-(CH₂)₂-C(O)OC(O)-CH₃). The preferred carboxylic ester is selected from propionic acid alkyl esters, more preferred propionic acid methylester (-(CH₂)₂-C(O)O-CH₃).

Representative non-delimiting useful examples of R₂ and R₃ alkyl chains substituents are carbonyl-, halogen-, ether-, nitril groups, wherein carbonyl- and ether groups are preferred.

The term "alkenyl" as used herein refers to alkyl chains containing the specified number of carbon atoms and containing at least one carbon-carbon double bond, wherein alkyl is defined as above and may be a straight or a branched hydrocarbon chain or may bear ring closures. For example, C2-C12 alkenyl means an alkenyl containing at least 2, and at most 10, carbon atoms and containing at least one double bond. Straight alkenyl chains are preferred. The alkenyl preferably represents C2-C24 alkenyl, more preferably C2-C12 alkenyl, most preferably C2-C8 alkenyl. Examples of "alkenyl" as used herein include but are not limited to vinyl (C2), allyl (C3), 1-butenyl, 1-pentenyl, 1-octenyl, 2-butenyl, 2-pentenyl, 1,3-butadienyl, 1,6-heptadienyl, 2,6-octandienyl, 2,7-octandienyl, 2,4,6-octantrienyl and 3-octenyl. The alkenyl may be substituted as defined above for alkyl.

The term "alkinyl" as used herein refers to alkyl chains containing the specified number of carbon atoms and containing at least one carbon-carbon triple bond, wherein alkyl is defined as above and may be a straight or a branched hydrocarbon chain or may bear ring closures. For example, C2 - C12 alkinyl means an alkinyl containing at least 2, and at most 12, carbon atoms and containing at least one triple bond. Representative examples of alkinyl include, but are not limited, to ethinyl, propinyl, 2-propinyl, 3-butinyl and 2-pentinyl, 1,6-heptadiinyl, 3,6-heptadiinyl, 2,7-octandiinyl, and octinyl. The alkinyl may be substituted as defined above for alkyl.

The term "cycloalkyl" as used herein, refers to a saturated monocyclic or polycyclic hydrocarbon group of at least three and up to the specified number of carbon atoms. Useful examples include cyclopropyl, cyclobutyl, cyclopentyl, cyclohexyl, cyclooctyl, decalinyl, hydrindanyl, decahydroazulenyl, tricyclo[6.2.1.0]undecanyl, tricyclo[5.2.1.0]decanyl, adamantyl and bicyclo[2.2.2]octyl. The cycloalkyl may be substituted as defined above for alkyl.

The term "cycloalkenyl" as used herein, refers to a monocyclic or polycyclic hydrocarbon group of at least three and up to the specified number of carbon atoms and having at least one carbon-carbon double bond. Useful examples are cyclopropenyl, cyclohexenyl, 1,4-cyclohexadienyl, 1,3-cycloheptadienyl, cyclooctenyl, tricyclo[4.3.0.1]dec-3-enyl, norbornenyl, bicyclo[2.2.2]oct-2-enyl and 1,5-cyclooctadienyl. The cycloalkenyl may be substituted as defined above for alkyl.

The term "aryl" as used herein refers to an aromatic carbocyclic ring having a specified number of carbon atoms. For example, C5-C6 aryl refers to an aromatic ring having at least 5 and at most 6 carbon atoms. The term "aryl" also includes a multicyclic group having more than one aromatic ring, such as C10 - C16 aryl. Useful examples are phenyl, naphthyl, anthracyl, phenanthryl, azulenyl, fluorenyl, phenalenyl and pyrenyl. The aryl residue is optionally substituted by one or more substituents independently selected from the group consisting of alkyl-, alkenyl-, alkinyl-, cycloalkyl-, cycloalkenyl-, aryl-groups as defined above or may be optionally substituted as defined above for alkyl. Alkyl-, alkenyl-, alkinyl-, cycloalkyl-, cycloalkenyl- and aryl-substituents may be also optionally substituted as defined above for alkyl.

The term "heteroaryl" as used herein refers to an heteroaromatic carbocyclic ring having a specified number of carbon atoms. For example, C4-C5 heteroaryl refers to an heteroaromatic ring having at least 4 and at most 5 carbon atoms and having one or more heteroatoms (Si, O, S or N). The nitrogen atoms can be optionally quaternized, and the sulfur atoms can be optionally oxidized, the silicon is mostly in oxidation state (IV) and can be optionally substituted by alkyl, cycloalkyl, alkenyl, cycloalkenyl, aryl, and heteroaryl. In some embodiments, the term "heteroaryl" includes a multicyclic group having more than one heteroaromatic ring, such as C8 - C15 heteroaryl. A multicyclic group having one or more heteroatoms, wherein at least one ring of the group is heteroaromatic, is referred to as a "heteroaryl" as well. In some embodiments, the term "heteroaryl" as used herein refers also to 5 to 8 membered aromatic groups having one or more heteroatoms (Si, O, S or N). The nitrogen atoms can be optionally quaternized, and the sulfur atoms can be optionally oxidized, the silicon is mostly in oxidation state (IV) and can be optionally substituted by alkyl, cycloalkyl, alkenyl, cycloalkenyl, aryl, and heteroaryl. Preferred heteroaryl residues have 5 or 6 ring members and include those derived from furan, imidazole, isothiazole, isoxazole, oxadiazole, oxazole, pyrazine, pyrazole, pyridazine, pyridine, pyrimidine, pyrroline, thiazole, thiophene, triazole, and tetrazole. Other preferred heteroaryl residues have 5 to 8 ring members and include those derived from isooxazole, pyridazine, pyrazine, pyran, 1,4-diazocine, 1,4-oxazocine, and silabenzene. Other preferred C8 - C15 heteroaryl residues include those derived from quinoline, naphtho[2,1,8-*def*]quinoline, benzo[*g*]quinoline, benzo[*f*]quinoline, *1H*-isoindole, indole, benzofuran, naphtho[2,1-b]furan, and dibenzofuran. The heteroaryl residue may be optionally substituted by one or more substituents independently selected from the group consisting of alkyl-, alkenyl-, alkinyl-, cycloalkyl-, cycloalkenyl-, aryl-groups and as defined above for alkyl. Alkyl-, alkenyl-, alkinyl-, cycloalkyl-, cycloalkenyl- and aryl-substituents may be also optionally substituted as defined above for alkyl.

The chemical formula part "OAc" as used herein refers to an acetate group (-OOC-CH₃), the group is bonded *via* the oxygen to a metal centre. For example Ge(OAc)₄ means germanium(IV) tetraacetate, which is equivalent to formula Ge(OOC-CH₃)₄.

The chemical formula part "OLau" as used herein refers to a laurate group (-OOC-(CH₂)₁₀-CH₃), the group is bonded *via* the oxygen to a metal centre. For example Ge(OLau)₄ means germanium(IV) tetralaurate, which is equivalent to formula Ge(-OOC-(CH₂)₁₀-CH₃)₄.

As used herein, the term "about" means within a statistically meaningful range of a value, such as a stated ratio, amount, time frame, temperature and the like. That is, the term "about" is used herein to extend the boundaries of the stated value above and below by a meaningful variance. Such variance can be within an order of magnitude, typically within 10 percent, more typically within 5 percent, above or below the stated value. Sometimes, the variance can be within the experimental error typical of standard methods used for the measurement and/or determination of a given value. The allowable variation encompassed by the term "about" will be readily appreciated by those skilled in the art.

In some embodiments, R₁ is selected from the group consisting of phenyl, methyl, ethyl, butyl, and -(CH₂)₂-COOMe. Benefits of the groups phenyl and -(CH₂)₂-COOMe are the effect of electron withdrawing and the resulting activation of the germanium center. Benefits of the methyl and ethyl groups are the high diffusion velocity in highly viscous solutions.

In some embodiments, R₂ is selected from the group consisting of -CH₃ and -(CH₂)₁₀-CH₃. Benefit of the -CH₃ group is the high diffusion velocity in highly viscous solutions. Benefit of the -(CH₂)₁₀-CH₃ group is a reduced odor of the synthesized polymer materials, the odor being mild and pleasant. That is, by using laurate groups, the "vinegar" odor of the synthesized polymer materials that comes from the acetates (as known in the field of tin catalysis), can be avoided.

In some embodiments the at least one organogermanium(IV) carboxylate is selected from the group consisting of: Ge(OAc)₄, Ge(OLau)₄, CH₃O(O)C(CH₂)₂Ge(OAc)₃, PhGe(OAc)₃, BuGe(OAc)₃, Bu₃Ge(OAc), Bu₃Ge(OLau), Me₂Ge(OAc)₂, Et₂Ge(OAc)₂, Ph₂Ge(OAc)₂, and a combination thereof. Benefit of Ge(OLau)₄ and Ge(OAc)₄ is the low solubility in low polar solvents combined with a high activity as heterogenous catalyst. Therefore the possibility of a catalyst recycling is given. Benefit of CH₃O(O)C(CH₂)₂Ge(OAc)₃, PhGe(OAc)₃, BuGe(OAc)₃, Me₂Ge(OAc)₂, Et₂Ge(OAc)₂, and Ph₂Ge(OAc)₂ is the high solubility in various solvents and, therefore, their applicability as homogenous catalyst. A further benefit of the compounds Ge(OAc)₄, Ge(OLau)₄, and CH₃O(O)C(CH₂)₂Ge(OAc)₃ is a easy to handle synthesis with high yields.

In some embodiments, the at least one organic acid anhydride is represented by the following formula (II):

R_{B}-COO-(O)C-R_{A} **(II)**

wherein
R_{A} and R_{B} are not covalently connected with each other, or
R_{A} and R_{B} are covalently connected with each other to form a cyclic organic anhydride, or
wherein the organic acid anhydride is a polymeric anhydride comprising at least two organic acid anhydrides of formula (II) which are covalently connected with each other *via* R_{A} and/or R_{B};
R_{A} is selected from the group consisting of: optionally substituted C1 - C18 alkyl, optionally substituted C5 - C16 aryl, substituted C1-C24 alkyl, optionally substituted C2 - C24 alkenyl, optionally substituted C2 - C24 alkinyl, optionally substituted C3 - C24 cycloalkyl, optionally substituted C3 - C24 cycloalkenyl, optionally substituted C5 - C15 heteroaryl, and optionally substituted 5 to 8 membered heteroaryl;
R_{B} is selected from the group consisting of: optionally substituted C1 - C18 alkyl, optionally substituted C5 - C16 aryl, substituted C1-C24 alkyl, optionally substituted C2 - C24 alkenyl, optionally substituted C2 - C24 alkinyl, optionally substituted C3 - C24 cycloalkyl, optionally substituted C3 - C24 cycloalkenyl, optionally substituted C5 - C15 heteroaryl, and optionally substituted 5 to 8 membered heteroaryl.

Representative non-delimiting examples for "cyclic organic anhydrides" useful in the present invention are succinic anhydride (SUA), glutaric anhydride, adipic anhydride, methylsuccinic anhydride, itaconic anhydride, maleic anhydride, phtalic anhydride, phenyisuccinic anhydride, diglycolic anhydride, 1,8-naphthalic anhydride, and diphenic anhydride.

Representative non-delimiting examples for "polymeric anhydrides" useful in the present invention are polysebacicanhydride, polyhexadecandioicanhydride, poly(ethylene-*alt*-maleic anhydride), and polydodecanedioicanhydride.

In some embodiments, the at least one organic acid anhydride is selected from the group consisting of acetic anhydride (Ac₂O), succinic anhydride (SUA), acetic lauric anhydride (CH₃-C(O)O(O)C-(CH₂)₁₀CH₃, AcOLau), and heptanoic anhydride (Hea₂O). Benefit of acetic anhydride (Ac₂O) is the high activity as cocatalyst. Further representative non-delimiting examples for " organic acid anhydrides " useful in the present invention are methacrylic anhydride, hexanoic anhydride, palmitic anhydride, propionic anhydride, valeric anhydride, isobutyric anhydride, and benzoic anhydride.

Preferably, the molar ratio of the at least one organogermanium(IV) carboxylate and the organic acid anhydride is between 1:0.1 and 1:50, more preferably about 1:10, most preferably about 1:1.

A combination of carboxylic anhydride and germanium(IV) carboxylate increases the catalytic activity and helps therefore, to save germanium catalyst. However, high anhydride amounts may also have a negative effect on the product properties. Mostly, the carboxylic anhydride is reacting with the starting material or the product. A non-delimiting example is the esterification of alcohols. In molar ratios between 1:0.1 and 1:0.5 the increase of the catalytic activity is relatively low. Starting with molar ratios of 1:0.6 and up to 1:4 a useful increase of the catalytic activity is given without significant impact on product properties. The best balance between product properties and activity acceleration is preferably given at a molar ratio of 1:1, i.e. this ratio typically does not influence the product properties significantly on the one hand and accelerates the reaction typically between 5 to 25% (depending on the germanium catalyst) on the other hand. Furthermore, in special cases, a very low amount of the germanium catalyst is used, wherein in these cases higher ratios of anhydride may be used without having an impact on product properties; for example, molar ratio of the at least one organogermanium(IV) carboxylate and the organic acid anhydride between 1:10 and 1:50 may be used. However, the overall molar carboxylic anhydride concentration is relatively low in these special cases. A representative, non-delimiting example for such a special case is the use of 0.1 mol% germanium catalyst and 2.0 mol% carboxylic anhydride, resulting in a ratio of 1:20.

As mentioned above, in one aspect, the present invention relates to a organogermanium(IV) tricarboxylate compound represented by the following formula (III):

(R₄)Ge((OOC-R₅)₃) **(III)**

wherein
R₄ is a substituent comprising an organic acid anhydride moiety;
R₅ is selected from the group consisting of: optionally substituted C1 - C18 alkyl, substituted C1-C12 alkyl, optionally substituted C2 - C12 alkenyl, optionally substituted C2 - C12 alkinyl, optionally substituted C3 - C12 cycloalkyl, optionally substituted C3 - C12 cycloalkenyl, optionally substituted C5 - C16 aryl, optionally substituted C5 - C15 heteroaryl, and optionally substituted 5 to 8 membered heteroaryl.

Benefit of the compounds of formula (III) is combination of the anhydride function and the germanium tricarboxylate center in one single compound. Both the anhydride function and the germanium tricarboxylate center are catalytically active, the resulting hybrid catalyst properties increase the catalytic activity significantly. Furthermore, the compounds of formula (III) are typically highly soluble in organic solvents and hence, may be suitably used as homogenous catalyst.

In preferred embodiments of the organogermanium(IV) tricarboxylate compound, R₄ is - (CHR₇)ₙ-COO-C(O)R₆
the index "n" is zero or is an integer between 1 and 28;
R₆ is selected from the group consisting of: hydrogen, optionally substituted C1 - C18 alkyl, substituted C1-C12 alkyl, optionally substituted C2 - C12 alkenyl, optionally substituted C2-C12 alkinyl, optionally substituted C3 - C12 cycloalkyl, optionally substituted C3 - C12 cycloalkenyl, optionally substituted C5 - C16 aryl, optionally substituted C5 - C15 heteroaryl, and optionally substituted 5 to 8 membered heteroaryl;
R₇ is selected from the group consisting of: hydrogen, optionally substituted C1 - C18 alkyl, substituted C1-C12 alkyl, optionally substituted C2 - C12 alkenyl, optionally substituted C2-C12 alkinyl, optionally substituted C3 - C12 cycloalkyl, optionally substituted C3 - C12 cycloalkenyl, optionally substituted C5 - C16 aryl, optionally substituted C5 - C15 heteroaryl, and optionally substituted 5 to 8 membered heteroaryl.

In some embodiments of the organogermanium(IV) tricarboxylate compound, R₄ is -(CH₂)₂-COO-C(O)CH₃.

In some embodiments of the organogermanium(IV) tricarboxylate compound, R₅ is -CH₃ or - (CH₂)₁₀-CH₃.

In some embodiments of the organogermanium(IV) tricarboxylate compound, R₄ is -(CH₂)₂-COO-C(O)CH₃ and R₅ is -CH₃.

In another aspect, the present invention relates to the use of a composition comprising at least one organogermanium(IV) carboxylate and at least one organic acid anhydride as described herein or of an organogermanium(IV) tricarboxylate compound as described herein, as a catalyst for homogenous and/or heterogeneous catalysis of chemical reactions. The data given in the experimental section below demonstrate that the compositions and compounds of the present invention are applicable for heterogeneous and/or homogeneous catalysis, and, in case of heterogeneous catalysis, allow for catalyst recycling. For example, in case of heterogeneous catalysis (e.g. Ge(OAc)₄ in mixtures with acid anhydrides), a catalyst recyclability of over 99% was observed. In preferred embodiments, the chemical reaction is selected from the group consisting of: (poly)urethane formation, transurethanisation, esterification, ring-opening esterification and polymerization, transesterification, and siloxane-formation. The data given in the experimental section below demonstrate that the compositions and compounds of the present invention are suitable and useful in catalyzing said chemical reactions. Table 5 in the experimental chapter further below provides an overview of chemical reactions which are catalyzed by germanium carboxylates according to the invention and applications relating thereto. It could be demonstrated that, in addition to the main application of the compositions and compounds of the invention, namely, the polyurethane formation, the present invention opens a wide range of applications in chemical catalysis/synthesis in various fields of synthetic, polymeric and/or material chemistry.

In another aspect, the present invention relates to a catalytic system comprising a composition comprising at least one organogermanium(IV) carboxylate and at least one organic acid anhydride as described herein and/or an organogermanium(IV) tricarboxylate compound as described herein, as a catalytic component. In preferred embodiments, the catalytic system is for use in catalyzing the following chemical reactions selected from the group consisting of: (poly)urethane formation, transurethanisation, esterification, ring-opening esterification and polymerization, transesterification, and siloxane-formation.

In another aspect, the present invention relates to a method for synthesizing an organogermanium(IV) tricarboxylate compound represented by the following formula (IV):

(R₈)Ge((OOC-R₉)₃) (IV)

wherein R₈ is -(CHR₁₀)ₘ-COO-R₉, the index "m" is zero or is an integer between 1 and 20; R₉ is selected from the group consisting of: hydrogen, optionally substituted C1 - C18 alkyl, substituted C1-C12 alkyl, optionally substituted C2 - C12 alkenyl, optionally substituted C2-C12 alkinyl, optionally substituted C3 - C12 cycloalkyl, optionally substituted C3 - C12 cycloalkenyl, optionally substituted C5 - C16 aryl, optionally substituted C5 - C15 heteroaryl, and optionally substituted 5 to 8 membered heteroaryl; R₁₀ is selected from the group consisting of: hydrogen, optionally substituted C1 - C18 alkyl, substituted C1-C12 alkyl, optionally substituted C2 - C12 alkenyl, optionally substituted C2-C12 alkinyl, optionally substituted C3 - C12 cycloalkyl, optionally substituted C3 - C12 cycloalkenyl, optionally substituted C5 - C16 aryl, optionally substituted C5 - C15 heteroaryl, and optionally substituted 5 to 8 membered heteroaryl; wherein the method comprises the consecutive steps of:
a) dissolving ClOC(CHR₁₀)ₘGeCl₃ in an organic solvent under light exclusion;
b) preparing a suspension by suspending Ag(OOCR₉) or PhNH₃(OOCR₉) as a solid phase in the solution obtained in step a) as a liquid phase and, then, stirring the suspension for 0.5 - 36 hours; to obtain the organogermanium(IV) tricarboxylate compound in the liquid phase;
c) filtering the suspension to separate the solid phase from the liquid phase comprising the organogermanium(IV) tricarboxylate compound; and
d) optionally isolating the organogermanium(IV) tricarboxylate compound from the liquid phase by evaporating the organic solvent and drying the compound in vacuum.

Said method for synthesizing an organogermanium(IV) tricarboxylate compound (as shown in formula (IV)) provides a novel and straightforward synthetic route for synthesizing germanium(IV) tricarboxylates which beneficially avoids the use of toxic heavy metal salts. In yet another aspect, the present invention relates to a method for synthesizing a polyurethane by reacting an organic polyester polyol or polyether polyol and an organic polyisocyanate in the presence of a catalytic amount at least one catalytic component, and optionally other additives, wherein the catalytic component comprises at least one organogermanium(IV) carboxylate and at least one organic acid anhydride as described herein and/or an organogermanium(IV) tricarboxylate compound as described herein.

### Short Description of the Drawings

The present invention is further demonstrated and illustrated by the following examples, yet without being restricted thereto. The examples are further illustrated by means of figures and drawings, which show:
Fig. 1 shows the conversion of -NCO in a model reaction (formation of mono- and diurethanes, MDU) under Ge(OAc)₄ catalysis in various concentrations, tracked *via* FT IR spectroscopy; 0.82 M MDI and 1.67 M MeOH in toluene at room temperature (RT); *Blanc = reaction without catalyst.
Fig. 2 shows the conversion of -NCO in the model reaction under 2.5 mol% Ge(OAc)₄ catalysis in various solvents, tracked *via* FT IR spectroscopy; 0.82 M MDI and 1.67 M MeOH at RT.
Fig. 3A shows the conversion of -NCO in the model reaction under 0.5 mol% of different catalysts, tracked *via* FT IR spectroscopy; 0.82 M MDI and 1.67 M MeOH at RT; *) Blanc = reaction without catalyst.
Fig. 3B shows the conversion of -NCO in the model reaction under 5.0 mol% of different catalysts, tracked *via* FT IR spectroscopy; 0.82 M MDI and 1.67 M MeOH at RT; *) Blanc = reaction without catalyst.
Fig. 4A and Fig. 4B show the conversion of -NCO in the model reaction of different catalysts and cocatalysts mixtures, tracked *via* FT IR spectroscopy; 0.82 M MDI and 1.67 M MeOH at RT; *) Blanc = reaction without catalyst.
Fig. 5 shows the conversion of -NCO during the polyurethane formation under different germanium catalysts, DABCO as reference and the reaction without catalyst, tracked *via* FT IR spectroscopy, with 12% toluene/THF (1:1) at 60 °C. *) Blanc = reaction without catalyst.
Fig. 6 shows the conversion of -NCO during the polyurethane formation, comparison of the cocatalyst system (Polymer GA1) with other catalysts systems (Polymer G1, G4, D1), Blanc Polymer B1 (without catalyst) is displayed as overall reference. The conversion was tracked *via* FT IR spectroscopy.*) Blanc = reaction without catalyst; Polymer GA1 catalysed with 2.5 mol% Ge(OAc)₄ and 2.5 mol% Ac₂O, overall 5 mol% catalyst.
Fig. 7 shows the conversion of -NCO during the water-blown polyurethane formation, Blanc Polymer B1 (without catalyst and without water) is displayed as overall reference. The conversion was tracked *via* FT IR spectroscopy. Conditions: 60 °C, 12 w% toluene.
Fig. 8 illustrates and overview of the principle of a flow and batch strategy for polyurethane preparation in solution and Ge(OAc)₄ recycling.

### Experimental Data and Examples

### A. Germanium tri- and tetracarboxylates

Chapter A of the experimental data deals with the synthesis, the analysis and use of germanium tri- and tetracarboxylates. Target properties of these catalysts are a simple and easy-to-use synthesis, high catalytic activity and a classification as not environmentally harmful. The common catalysts dibutyltin dilaurate (DBTL) and 1,4-diazabicyclo[2.2.2]octane (DABCO) were used as comparative examples.

Materials and methods are given under chapter A.8 below.

### A.1. Synthesis of the Catalysts

Ge(OAc)₄ and Ge(OLau)₄ were synthesized in a salt metathesis reaction (Scheme 1). The Ge(OAc)₄ synthesis was unknown with KOAc, the compound Ge(OLau)₄ is interesting in relation to sustainability, and laurates can be easily isolated from natural sources such as vegetable fats. As alkyl substituted germane BuGe(OAc)₃ was synthesized. As EWG group (electron-withdrawing group) substituted germanes, PhGe(OAc)₃ and the two propionic acid derivatives (PAA)Ge(OAc)₃ and (PME)Ge(OAc)₃ were synthesized. The synthesis was as well done in a salt metathesis with AgOAc or anilinium acetate (PhNH₃(OAc)). In case of (PAA)Ge(OAc)₃ the acyl chloride group was also reacting with YOAc (Y = Ag or PhNH₃) and a acetic anhydride function was formed (Scheme 1). PhGeCl₃ was synthesized analog to a known procedure [4]. The germyl propionic acid derivatives were synthesized by applying the principle of known procedures in a hydrogermylation reaction on HGeCl₃ [5, 6]. All compounds were characterized *via* NMR spectroscopy. (PAA)Ge(OAc)₃, (PME)Ge(OAc)₃, PhGe(OAc)₃ were not known in literature, moreover is (PAA)Ge(OAc)₃ the first germyl carboxylic acid anhydride. An *in situ* preparation in solution without work up is possible, AgOAc is used in suspension in chloroform or toluene, after filtration the solution was directly used as catalyst solution. (PAA)Ge(OAc)₃, (PME)Ge(OAc)₃, PhGe(OAc)₃ were good soluble in organic solvents, in contrast the tetracarboxylates were poorly soluble in organic solvents. Therefore, this compounds can be applied in different areas of catalysis.

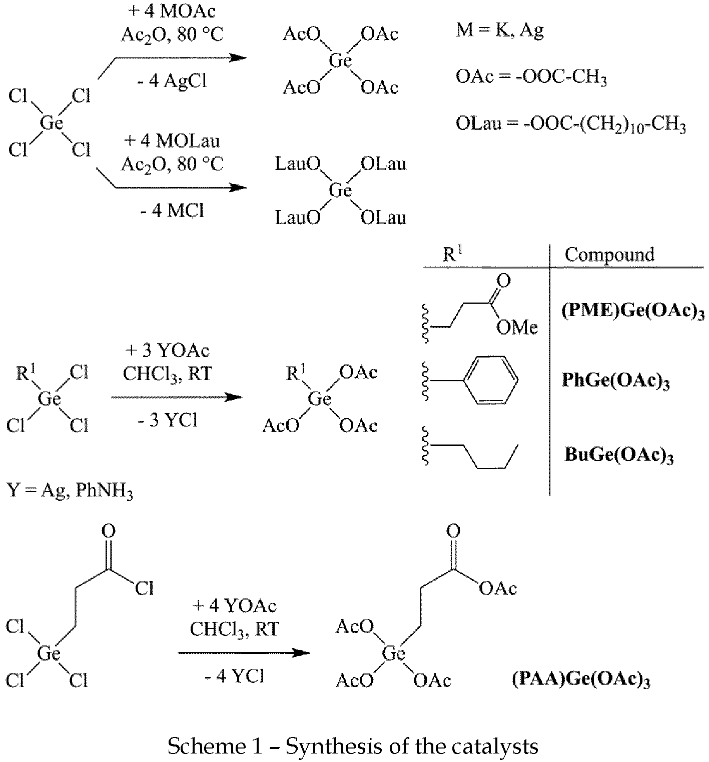

### A.2 Properties of the compounds and Catalysis Screening

### A.2.1 Solubility of compounds

Ge(OAc)₄ and Ge(OLau)₄ are poorly soluble in organic solvents (Table 1), an application idea is the use as heterogeneous catalysts. In H₂O Ge(OAc)₄ is good soluble and stable in water. The EWG substituted catalysts ((PAA)Ge(OAc)₃, (PME)Ge(OAc)₃, PhGe(OAc)₃) were good soluble in organic solvents, which is an ideal base for a homogeneous catalyst application.

**Table 1 - Solubility of Ge(OAc)₄**

| **Solvent** | **m(Ge(OAc)₄) g/L** | **Method** |
|---|---|---|
| Toluene | 2.6 | Gravimetry |
| Benzene | 2.7 | NMR |
| Chloroform | 4.8 | NMR |
| DCM | 4.2 | Gravimetry |
| THF | 4.3 | Gravimetry |
| H₂O | 170 | Gravimetry |

To demonstrate the high flexible use of germanium tri- and tetracarboxylates in catalysis, a various number of reactions was catalyzed with germanium tri- and tetracarboxylates analog to reactions which are typically DBTL catalyzed (see following chapters A.2.2 - A.2.4 and Tables 2, 3, and 4).

### A.2.2 Screening Reaction 1-4; Applications in Urethane Chemistry

The screening Reaction 1-4 is illustrated in Scheme 2 and the results are shown in Table 2.

Phenyl isocyanate (Reaction 1) and methylene diphenyl diisocyanate, MDI, (Reaction 2) were reacted with methanol to form an urethane.

Formed products are the corresponding mono- and diurethanes (MDU). Reaction 1 was catalyzed by Ge(OAc)₄, PhGe(OAc)₃, (PAA)Ge(OAc)₃, (PME)Ge(OAc)₃ and BuGe(OAc)₃. As reference the common catalysts DBTL and DABCO were investigated. Reaction 1 was tracked *via* NMR spectroscopy, Ge(OAc)₄ was measured in suspension and all other compounds were fully solved. All germanium catalysts in this example need under 15 min. for 50% conversion, which is highly acceptable for any technical application (Reactions 1a-e Table 2). With Ge(OAc)₄ and (PAA)Ge(OAc)₃ two catalysts were shown which were highly active; these germanium(IV) carboxylate compounds were in a similar range active as the industrial standard catalysts (DABCO). Reaction 2 was catalyzed by Ge(OAc)₄, PhGe(OAc)₃, (PAA)Ge(OAc)₃, (PME)Ge(OAc)₃. The activity and stability can be supported by adding acetic anhydride (Ac₂O) to the approaches with Ge(OAc)₄, wherein this beneficial effect was investigated more in detail (see below). Ac₂O alone (Reaction 2i, Table 2) showed after 5 Min. a significant conversion, with reaction progress the anhydride is partially consumed from alcohols (catalytic activity decreased dramatically). Therefore, anhydrides can be only used as cocatalyst (see below). The MDU formation in Reaction 2 was tracked *via* FT IR spectroscopy. (PAA)Ge(OAc)₃ was the most active compound in Reaction 2. This is in contrast to the results of Reaction 1, an explanation is a diffusion limitation for the poorly soluble Ge(OAc)₄. Reaction 3 was a block polymerization to form a polyurethane. Reaction 4 was used to demonstrate an application in polyurethane degradation, under the corresponding conditions (Table 2). This reaction is a known process for polyol recycling and increases the sustainability of polyurethane materials significantly. As to the inventors' and applicant's best knowledge, the present inventions shows for the first time that polyurethane degradation under germanium catalysis is possible. Overall, the results of this example demonstrate a broad field of applications shown for germanium tetra- and triacetates and the corresponding mixtures with Ac₂O. The germanium triacetates (PhGe(OAc)₃, (PAA)Ge(OAc)₃ and (PME)Ge(OAc)₃), were not known to the public so far.

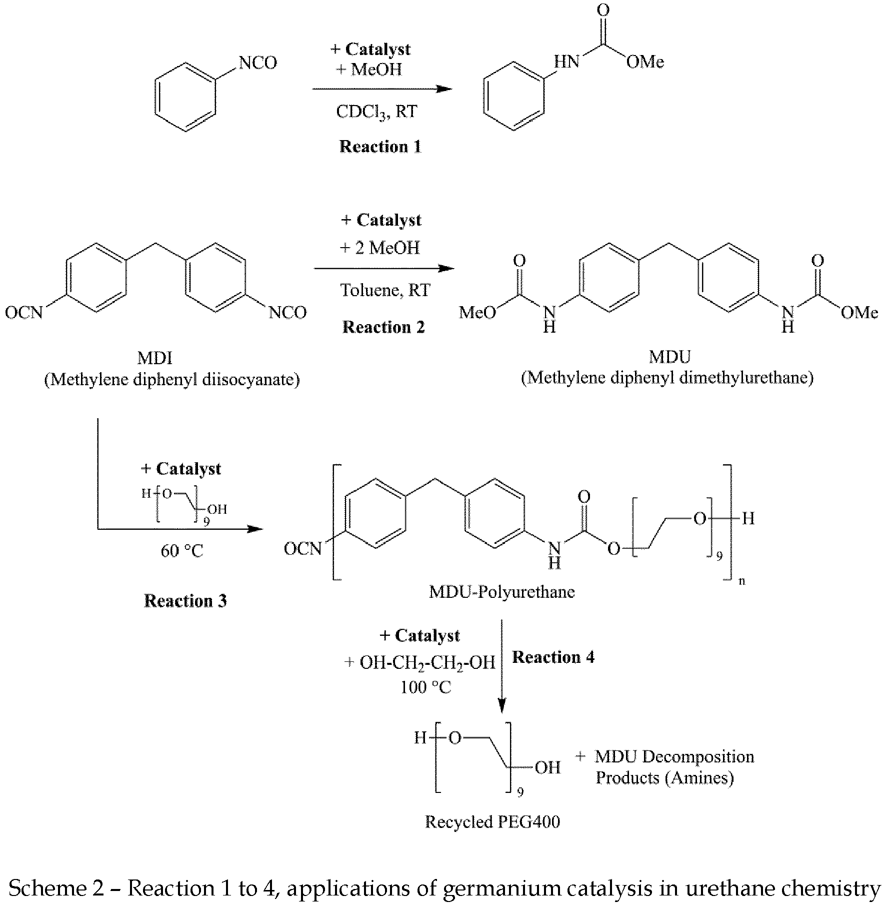

**Table 2 - Results of the reaction screening (reaction 1 to 4); *) % amount of catalyst in mol%; 2*) % Product under the use of the catalyst; 3*) % Product without any catalyst;**

| **#** | **#** | **Reaction and Conditions** | | **mol %*** | **Catalyst** | **with cat. 2*** | **without cat. 3*** |
|---|---|---|---|---|---|---|---|
| 1 | a | PhNCO + MeOH → Ph(NH)CO(OMe) | 7 min., RT | 1 | Ge(OAc)₄ | 50% | 12% |
| | b | | 9 min., RT | 1 | (PAA)Ge(OAc)₃ | 50% | 16% |
| | c | | 13 min., RT | 1 | (PME)Ge(OAc)₃ | 50% | 20% |
| | d | | 12 min., RT | 1 | PhGe(OAc)₃ | 50% | 16% |
| | e | | 14 min., RT | 1 | BuGe(OAc)₃ | 50% | 22% |
| | f | | << 50 s, RT | 1 | DBTL | 50% | < 2% |
| | g | | 2 min, RT | 1 | DABCO | 50% | 5% |
| 2 | a | MDI + MeOH → Me-MDU-Me | 5 min., RT | 5 | Ge(OAc)₄ | 48% | 8% |
| | b | | 5 min., RT | 5 | Ge(OLau)₄ | 65% | 8% |
| | c | | 5 min., RT | 1 | Ge(OAc)₄ | 18% | 8% |
| | d | | 5 min., RT | 2 | Ge(OAc)₄(1 mol%) + Ac₂O (1 mol%) | 50% | 8% |
| | e | | 5 min, RT | 5 | (PAA)Ge(OAc)₃ | 90% | 8% |
| | f | | 5 min., RT | 5 | PhGe(OAc)₃ | 79% | 8% |
| | g | | 5 min., RT | 1 | PhGe(OAc)₃ | 20% | 8% |
| | h | | 5 min, RT | 2 | PhGe(OAc)₃ (1 mol%) + Ac₂O (1 mol%) | 25% | 8% |
| | i | | 5 min., RT | 1 | Ac₂O | 32% | 8% |
| 3 | a | MDI + PEG400 → MDU-Polyurethane | 15 min., 60°C | 2 | Ge(OAc)₄(1 mol%) + Ac₂O (1 mol%) | 100% | 30% |
| 4 | a | MDU-Polyurethane + OHCH₂CH₂OH → PEG400 + decomposing products | 3 h, 100 °C | 10 | Ge(OAc)₄ | 23% | 0% |
| | b | | 3 h, 100 °C | 2 | DBTL | 35% | 0% |

### A.2.3 Screening Reaction 5-9; Applications in Ester/Polyester Chemistry

The screening reaction 5-9 is illustrated in Scheme 3 and the results are shown in Table 3.

To show applications in ester and polyester synthesis, the catalysts (PME)Ge(OAc)₃, (PAA)Ge(OAc)₃ and Ge(OAc)₄ were investigated. Reactants with acetic anhydride and methanol or t-butanol in Reaction 5 and 6 were investigated. From (PME)Ge(OAc)₃ and (PAA)Ge(OAc)₃ no catalytic activity was observed, details shown in Table 3. In case of Ge(OAc)₄ a reaction acceleration were observed. ε-Caprolactone or lactide was heated up and in presence of Ge(OAc)₄ or DBTL, a ring opening polymerization (ROP) was observed, in contrast without catalyst no reaction was observed. The activity and stability was supported by adding of acetic anhydride (Ac₂O) to the approaches with Ge(OAc)₄, thereby significantly reducing the amount of Ge(OAc)₄. Under DBTL catalysis the reaction was faster but, as per the inventors' and the applicant's best knowledge, on this point a germanium carboxylate-based ROP polymerization was the first time shown. In literature Ge(OAc)₄ is known as a catalyst for the PET polymer transesterification [2, 7, 8, 9], this catalysis was also tested in this example and the results were matching with the literature results. If a mixture of Ge(OAc)₄ and Ac₂O was used, a transesterification was also observed. For this purpose, ethyl acetate was reacted with an excess of *n*-octanol and *n*-octyl acetate was formed. Overall, Ge(OAc)₄ was shown as high versatile non heavy metal based catalyst in ester/polyester chemistry. Novel results of this work were the use of Ge(OAc)₄ in esterification and ROP (in Reaction 5 - 8).

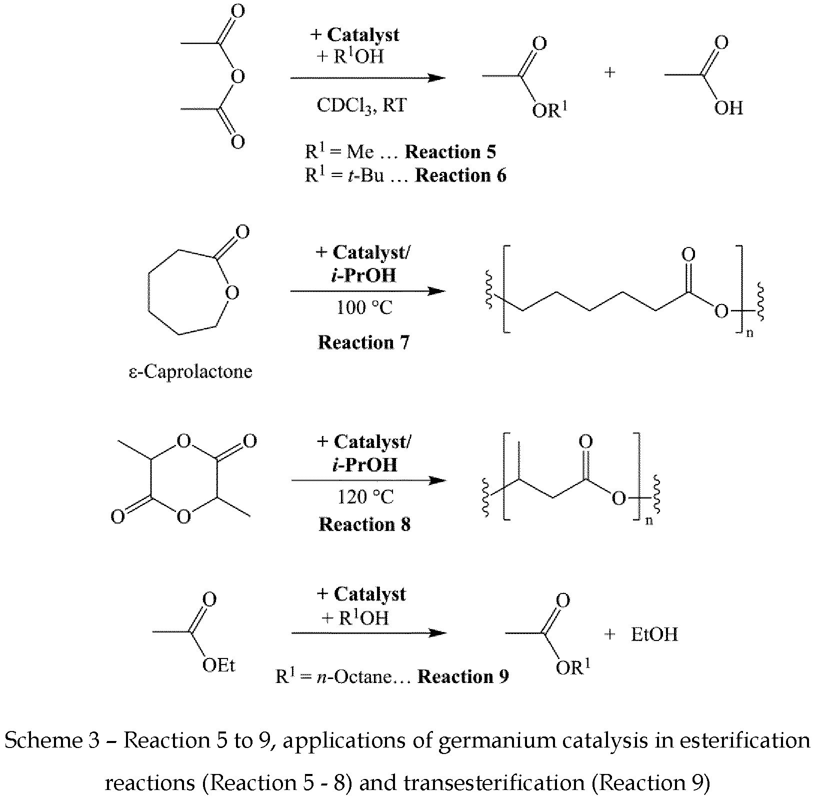

**Table 3 - Results of the reaction screening (Reaction 5 to 9); *) % amount of catalyst in mol%; 2*) % Product under the use of the catalyst; 3*) % Product without any catalyst;**

| **#** | **#** | **Reaction and Conditions** | | **mol%*** | **Catalyst** | **with cat. 2*** | **without cat. 3*** |
|---|---|---|---|---|---|---|---|
| 5 | a | Ac₂O + MeOH → AcOMe + AcOH | 18 h, RT | 5 | Ge(OAc)₄ | 90% | 50% |
| | b | | 14 h, RT | 1 | (PAA)Ge(OAc)₃ | 50% | 40% |
| 6 | a | Ac₂O + *t*-BuOH → AcOtBu + AcOH | 18 h, RT | 5 | Ge(OAc)₄ | 80% | 10% |
| | b | | 14 h, RT | 1 | (PAA)Ge(OAc)₃ | 10% | 10% |
| 7 | a | ε-Caprolactone → ((CH₂)₅-COO-)ₙ | 18 h, 100 °C | 5 | Ge(OAc)₄ | 100% | 0% |
| | b | | 16 h, 100 °C | 5 | Ge(OAc)₄ (2.5 mol%) + Ac₂O (2.5 mol%) | 100% | 0% |
| | c | | 18 h, 100 °C | 1 | (PAA)Ge(OAc)₃ | 0% | 0% |
| | d | | 18 h, 100 °C | 5 | (PME)Ge(OAc)₃ | 0% | 0% |
| | e | | 3 h, 100 °C | 1 | DBTL | 100% | 0% |
| 8 | a | Lactide → Polylactide | 18 h, 120 °C | 5 | Ge(OAc)₄ | 78% | <5% |
| | b | | 3 h, 120 °C | 1 | DBTL | 43% | <5% |
| 9 | a | AcOOEt + n-Ocatanol → AcOOEt + AcOO(n-Oct) + EtOH | 18 h, 100 °C | 5 | Ge(OAc)₄ | 22% | 0% |
| | b | | 18 h, 100 °C | 5 | Ge(OAc)₄ (2.5 mol%) + Ac₂O (2.5 mol%) | 15% | 0% |
| | c | | 18 h, 100 °C | 1 | DBTL | 82% | 0% |

### A.2.4 Screening Reaction 10 and 11; Applications in Silyl Ether Exchange

The screening Reaction 10 and 11 is illustrated in Scheme 4 and the results are shown in Table 4.

Sol gel and silyl ether exchange reactions are highly interesting in material chemistry. In Reaction 10 the catalysis of Ge(OAc)₄ or a corresponding mixture with Ac₂O in a sol gel reaction were shown. A standard procedure was used to cross link the starting material TEOS (tretraethoxy silane). Furthermore, an exchange between TEOS and methanol was investigated in Reaction 11, used catalysts were (PAA)Ge(OAc)₃ and Ge(OAc)₄ (Table 4). As per the inventors' and the applicant's best knowledge, with Ge(OAc)₄ and (PAA)Ge(OAc)₃ the first time, a silyl ether exchange reaction under germanium carboxylate catalysis was demonstrated.

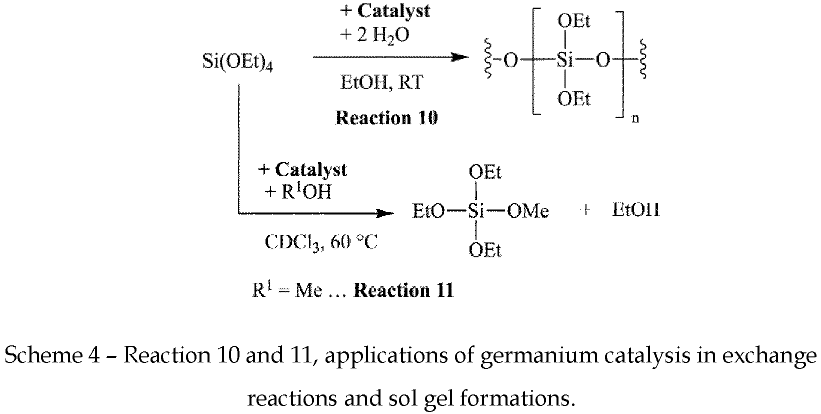

**Table 4 - Results of the reaction screening (Reaction 10 and 11), *) % amount of catalyst in mol%; 2*) % Product under the use of the catalyst; 3*) % Product without any catalyst;**

| **#** | **#** | **Reaction and Conditions** | | **mol%*** | **Catalyst** | **with cat. 2*** | **without cat. 3*** |
|---|---|---|---|---|---|---|---|
| **10** | **a** | Si(OEt)₄ + 2 H₂O → Siloxane network | 24 h, RT | 5 | Ge(OAc)₄ | 100% | 0% |
| | **b** | | 24 h, RT | 5 | Ge(OAc)₄ (2.5 mol%) + Ac₂O (2.5 mol%) | 100% | 0% |
| | **c** | | 24 h, RT | 1 | DBTL | 100% | 0% |
| **11** | **a** | Si(OEt)₄ + MeOH → Si(OEt)ₓ(OMe)_{y} + y EtOH | 60 h, 60°C | 1 | (PAA)Ge(OAc)₃ | 17% | 0% |
| | **b** | | 96 h, 60°C | 5 | Ge(OAc)₄ | 38% | 0% |

### A.2.5 Summery and Overview of the Screening

To show the high flexibility and wide application, the following reactions were successfully catalyzed in this invention (Table 5). On this point the catalysts described herein replaced the well-known tin catalysts, such as DBTL (dibutyltin dilaurate). Furthermore, for the catalysts a detailed investigation was done in the field of polyurethane synthesis, examples are shown in the following sections.

**Table 5 - Overview of reactions which was catalyzed by germanium carboxylates**

| **Reaction** | **Catalyst** | **Applications** |
|---|---|---|
| (Poly)urethane formation | Ge(OAc)₄ / Ac₂O | Polyurethane Synthesis |
| | Ge(OLau)₄ / Ac₂O | |
| | (PAA)Ge(OAc)₃, | |
| | (PME)Ge(OAc)₃, | |
| | PhGe(OAc)₃ / Ac₂O | |
| Transurethanisation | Ge(OAc)₄, / Ac₂O | Polyurethane degradation (glycolysis) |
| Esterification | Ge(OAc)₄ / Ac₂O | (Poly)ester Synthesis |
| Ring-opening esterification and polymerization (ROP) | Ge(OAc)₄ / Ac₂O | (Poly)ester Synthesis (e.g. PLA, PCL) |
| Transesterification | Ge(OAc)₄ / Ac₂O | |
| Siloxane-formation | Ge(OAc)₄ / Ac₂O | Sol gel reactions, sol gel glasses |
| | (PAA)Ge(OAc)₃ | |

### A.3 Investigation of the Catalyst Type of Ge(OAc)₄ (Heterogenous vs. Homogenous Catalysis)

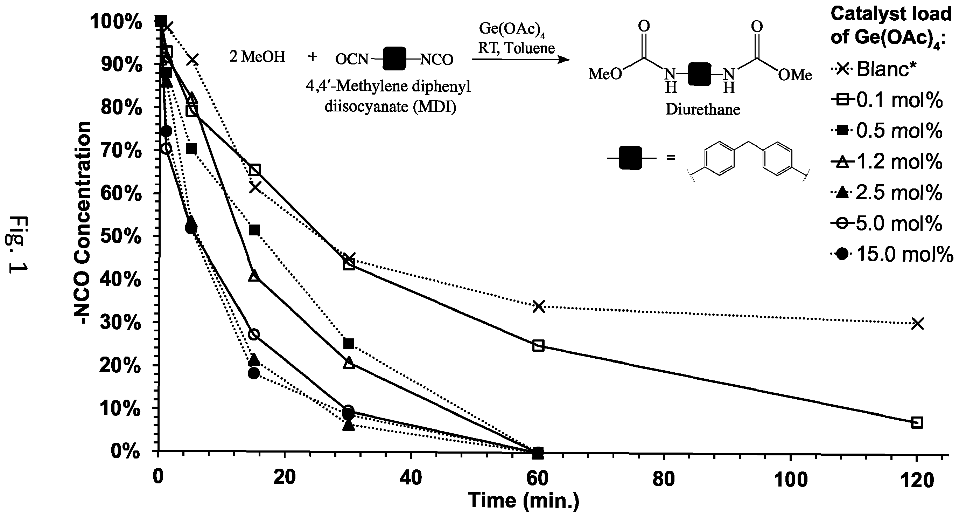

In the catalyst screening it was observed that the catalyst was not fully solved in the reaction mixture. In this section it was clarified which type of catalysis is running during the reaction. For this purpose, various concentrations of Ge(OAc)₄ were used in the same experimental setting as in the catalyst screening (0.82 M MDI and 0.82 MeOH in toluene, formation of MDU, see Reaction 2 above). A saturated clear solution of Ge(OAc)₄ in toluene corresponds in this setting to a catalyst load of 0.5 mol%. The solubility at room temperature of Ge(OAc)₄ is 2.6 g/L in toluene. Therefore, the measurements with a catalyst load of 0.1 and 0.5 mol% working homogeneous, Ge(OAc)₄ is fully solved in the reaction mixture. Fig. 1 shows that at higher catalyst concentrations the reaction acceleration is increased. Between 1.2 to 15.0 mol% only parts of the catalyst are solved and other parts are suspended as a solid. Ge(OAc)₄ was working in a mix of homogenous and heterogenous catalyst. Loads of 2.5, 5.0 and 15.0 mol% delivered similar curves. From these 3 curves (2.5 mol%, 5.0 mol% and 15.0 mol% in Fig. 1), a saturation function can be observed. Over 2.5 mol% catalyst load, no further increase of the reaction velocity can be obtained (saturation function). In Table 6 the (average) reaction velocity (v) was calculated for a pure homogenous catalysis (0.5 mol%) and for a mixed catalysis 2.5 mol%. From this calculation a portion of 51% homogenous catalysis was obtained, therefore can be reported, Ge(OAc)₄ works in this setting with 49% heterogeneous catalysis if the catalyst load is above 2.5 mol%. Furthermore, was the first time shown, a detailed study to the reaction of hetero- and homogeneous Ge(OAc)₄ catalysis in a urethane formation. If one considers that 51 % of the activity is accounted by the homogeneous part. It can be assumed that a higher solubility leads to a higher acceleration of the reaction. Therefore, solvent effects on this catalytic reaction were studied as next step.

**Table 6 - Kinetic of homogeneous and heterogeneous catalyst average above the first 30 min. of the reaction. (*Blanc, reaction without catalyst); Δv(mmol/L*s) is the velocity difference between Blanc and the catalyzed reactions.**

| | **Blanc*** | **0.5 mol% Ge(OAc)₄** | **2.5 mol% Ge(OAc)₄** |
|---|---|---|---|
| Product (mol/L) | 0.45 | 0.61 | 0.77 |
| *t*(*s*) | 1800 | 1800 | 1800 |
| *v* (mmol/L*s) | 0.251 | 0.341 | 0.426 |
| *Δv*(mmol/L*s) | 0.000 | 0.090 | 0.175 |
| %homogenous | - | 100% | 51% |

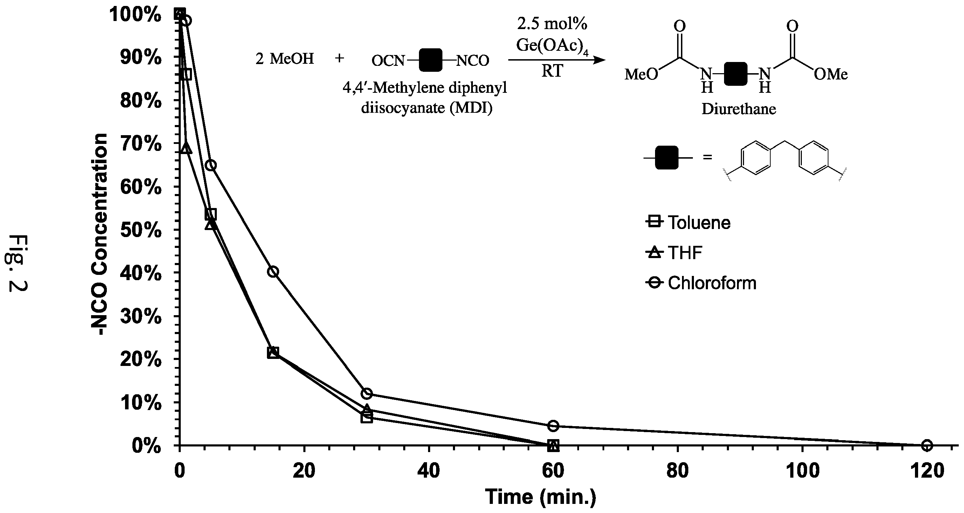

The results from the measurement in toluene were compared with results of measurements performed in chloroform and THF, at equal concentrations of Ge(OAc)₄. This solvent selection covered the main part of the eluotropic series. Lower polar solvents are critical in relation to the MDI solubility. In Fig. 2, the solvent dependency is illustrated, wherein the catalysis in chloroform was minimally slower as in toluene. These results are matching with the literature, according to which the urethane formation is faster in lower polar solvents [10]. In the present case, the higher solubility in chloroform cannot equal these solvent effects. In THF the solubility is high enough to accelerate the reaction in a similar manner as in toluene. Overall, it could be demonstrated that Ge(OAc)₄ can be used in various solvents, wherein in THF negative solvent effects are balanced out by the higher solubility of the catalyst.

### A.4 Catalytic Activity in Comparison

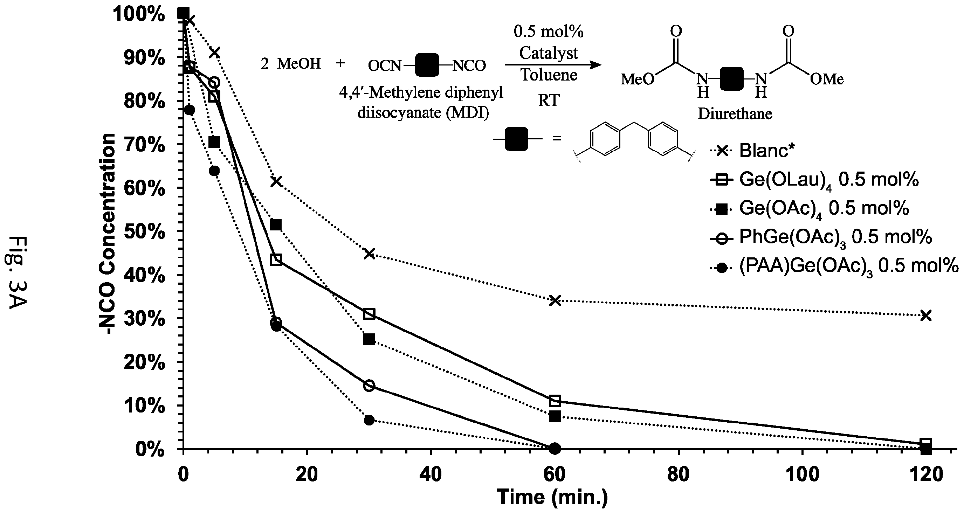

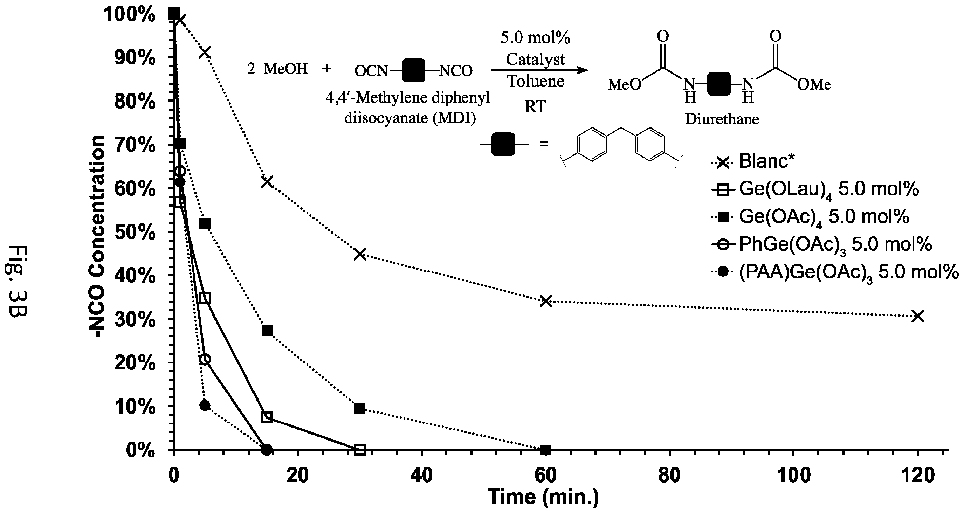

In this chapter the catalytic activity of Ge(OAc)₄, Ge(OLau)₄, PhGe(OAc)₃ and (PAA)Ge(OAc)₃ were compared. The results are shown in Fig. 3A (0.5 mol% catalyst load) and Fig. 3B (5 mol% catalyst load). With 0.5 mol% catalyst load all catalysts were fully solved and fully worked as homogeneous catalyst. Ge(OAc)₄ and Ge(OLau)₄ converted with 0.5 mol% catalyst load in a similar manner, wherein with PhGe(OAc)₃ a significantly higher conversion was observed. A possible explanation for that behavior, but not being wished to be bound to a certain theory, is the -I effect and an additional activation of the germanium atom due to phenyl group. At a catalyst concentration of 5 mol%, Ge(OAc)₄ and Ge(OLau)₄ are partially solved. Ge(OLau)₄ is more active than Ge(OAc)₄, wherein the reason is the higher solubility and the resulting higher amount of homogenous catalyst. The solubility of Ge(OLau)₄ was around 2 times higher, with 11 g/L in benzene (determined *via* NMR). (PAA)Ge(OAc)₃ and PhGe(OAc)₃ were fully solved and after 5 min (PAA)Ge(OAc)₃ showed the highest conversion of this study. After 15 min under (PAA)Ge(OAc)₃ and PhGe(OAc)₃ catalysis the -NCO concentration was under the limit of quantification (LOQ). Moreover, (PAA)Ge(OAc)₃ and PhGe(OAc)₃ worked with a catalyst load of 0.5 mol% similar fast as Ge(OAc)₄ with 5 mol% under these conditions. Overall, with (PAA)Ge(OAc)₃ and PhGe(OAc)₃ highly active catalysts could be presented which were working fully homogeneous. With Ge(OAc)₄ and Ge(OLau)₄ catalyst systems could be demonstrated, which can work homogenous and heterogenous in parallel.

In summary, both (PAA)Ge(OAc)₃ and PhGe(OAc)₃ showed the highest catalytic activity and worked as fully soluble catalysts. These compounds can be *in situ* prepared with quantitative yields and a direct usable catalyst solution was obtained. Benefit of Ge(OAc)₄ is the poor solubility and a its suitability as heterogeneous catalyst. Moreover, the catalysts (PAA)Ge(OAc)₃ and PhGe(OAc)₃ were about 10 times more active as Ge(OAc)₄ under these model conditions.

### A.5 Catalytic activity of mixtures of germanium carboxylates with Acetic Anhydride as Cocatalyst

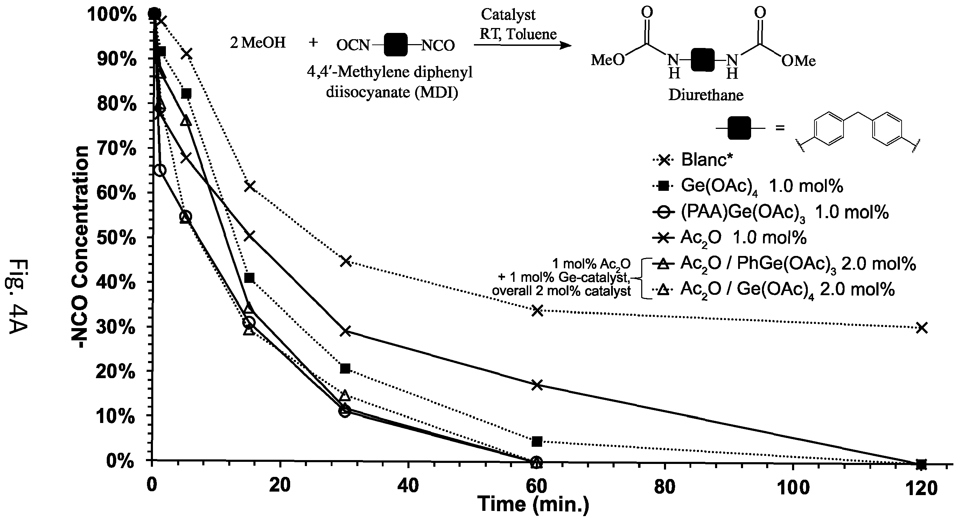

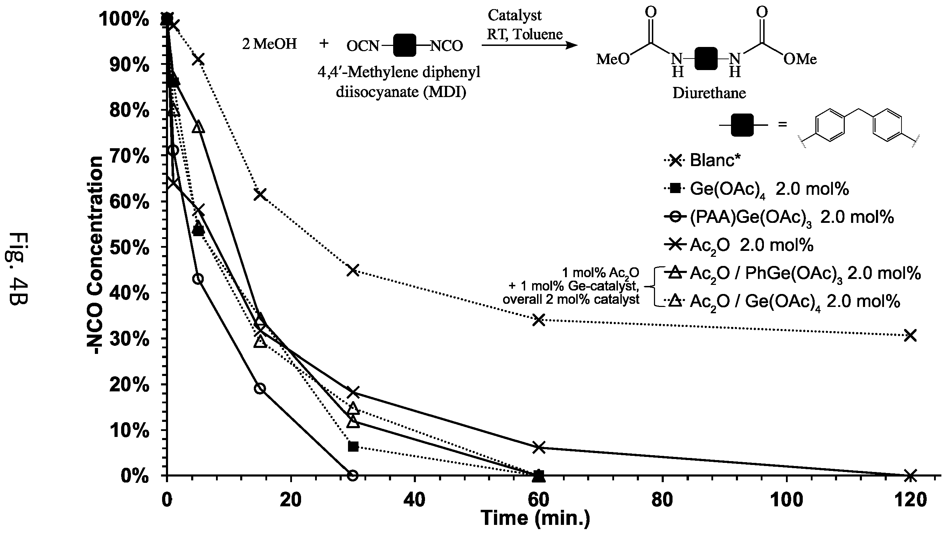

(PAA)Ge(OAc)₃ showed so far the highest catalytic activity, while PhGe(OAc)₃, (PME)Ge(OAc)₃, Ge(OAc)₄ were less active. Moreover, mixtures of Ac₂O with the Ge-catalysts showed significant accelerations in the screening experiments (see chapter B Table 12 and Chapter A Table 2). Therefore, the use of an organic acid anhydride as cocatalyst was investigated more in detail in this section. For this purpose, acetic anhydride (Ac₂O) as cocatalyst was investigated for Ge(OAc)₄ and PhGe(OAc)₃. The results are shown in Fig. 4A and Fig. 4B.

Compared were a mixture of 1 mol% germanium compound (PhGe(OAc)₃ or Ge(OAc)₄) and 1 mol% of Ac₂O with 1 or 2 mol% (PAA)Ge(OAc)₃ or Ge(OAc)₄. For this experiment series the model reaction MDI and MeOH, as described in the sections above, was used. Pure Ac₂O promotes the reactions significantly in relation to the blanc reaction (without catalyst) (Fig. 4A and 4B). Ac₂O cocatalysis with Ge(OAc)₄ was also more active as only under Ge(OAc)₄ catalysis. 1 mol% of (PAA)Ge(OAc)₃ was in the start phase higher active as a corresponding mixture of Ge(OAc)₄ / Ac₂O or PhGe(OAc)₃ / Ac₂O (each compound 1 mol%, overall 2 mol% catalyst). If 2 mol% of (PAA)Ge(OAc)₃ were used (Fig. 4B) an higher acceleration was observed. Overall, was shown the use of acetic anhydride as cocatalyst works well and promotes the reactions.

### A.6 Polyurethane Preparation

### A.6.1 Kinetic Investigation and Polymerization in Bulk

In this section polyurethanes in a state-of-the-art reaction were formed under the use of the catalysts in the sections described above. Reacted was a polyol with a diiscocyanate. Used polyols were Kuraray P2010 (2-methyl-2,4-pentanediol (MPD) and trimethylolpropane (TMP) based adipate polyester polyol), Kuraray C2090 (2-Methyl-2,4-pentanediol (MPD) polycarbonate based polyol) and PEG 400. As diisocyante, the common building blocks MDI (4,4'-methylene-diphenyl diisocyanate) and IPDI (isophorone diisocyanate) were used. The synthesis of the polyurethane samples is illustrated in Scheme 5 below. Table 7 below gives an overview of the prepared polyurethane samples.

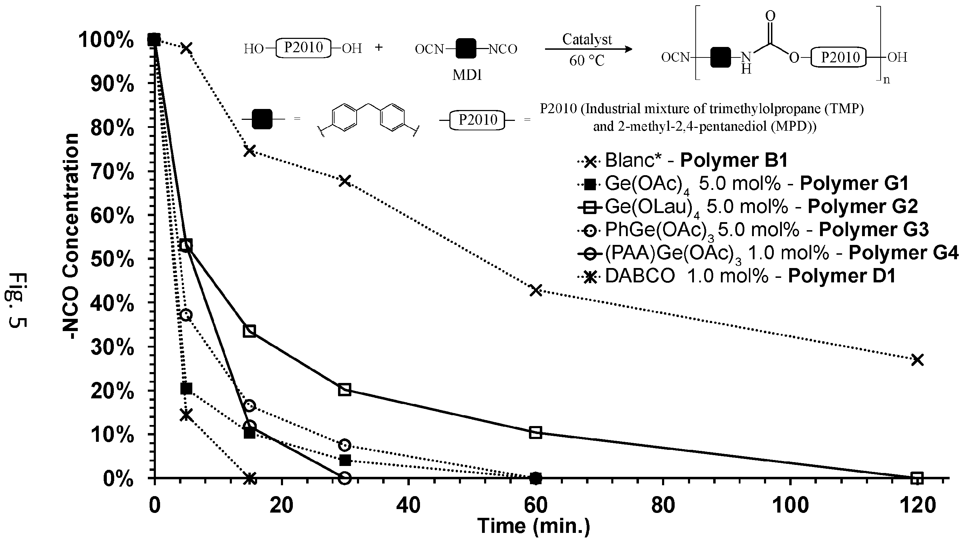

During the polymerization of Polymer G1-4, B1 and D1 the -NCO conversion was tracked *via* FT IR spectroscopy and a time-conversion diagram was produced (Fig. 5). In contrast to the model reaction (MDU formation, Reaction 2) were in this bulk polymerization Ge(OLau)₄ less active as Ge(OAc)₄. Reason is the significantly higher viscosity of the polymer mixture and the changed diffusion conditions. If DABCO and Ge(OAc)₄ are compared during the polymerization, after 5 min the conversion under DABCO remains relatively high, while the sterically more demanding Ge(OAc)₄ catalyst is working significantly slower. Second reason is DABCO is fully solved, wherein, in contrast, the heterogeneous part of Ge(OAc)₄ is additionally hindered due to the high viscosity, to work with the full potential. The highest activity in this experiment was observed with DABCO and (PAA)Ge(OAc)₃. In case of Polymers G5 and D2, a full conversion was observed after 5 min., which is related due to the high activity of DABCO and (PAA)Ge(OAc)₃ in relation to a catalyst load of 5 mol%. Overall, this experiment demonstrated that Ge(OAc)₄ and (PAA)Ge(OAc)₃ are good usable catalysts in the polyurethane formation. With (PAA)Ge(OAc)₃ a novel catalyst is provided, which shows a similar catalytic activity as DABCO and, thus, represents a suitable DBTL replacement.

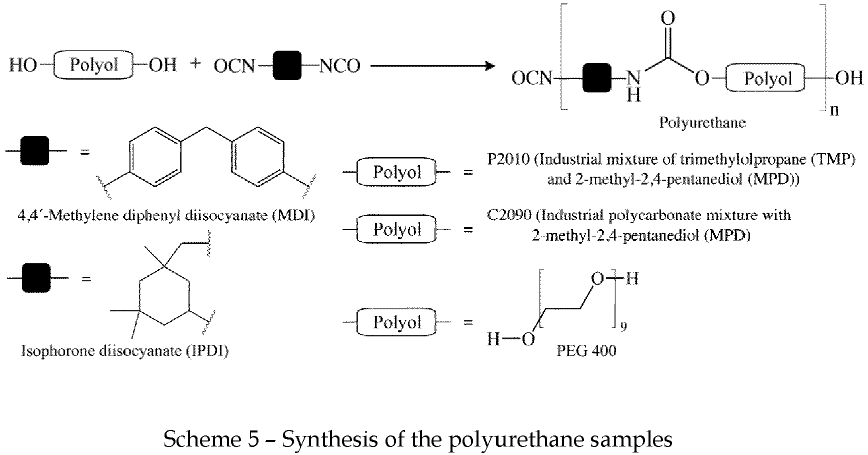

**Table 7 - Overview of the prepared polyurethane samples**

| **Polymer** | **Building blocks** | **Catalyst** | **Method** |
|---|---|---|---|
| **Polymer G1** | MDI + P2010 | 5 mol% Ge(OAc)₄ | 12% THF/toluene (1:1) |
| **Polymer G2** | MDI + P2010 | 5 mol% Ge(OLau)₄ | 12% THF/toluene (1:1) |
| **Polymer G3** | MDI + P2010 | 5 mol% PhGe(OAc)₃ | 12% THF/toluene (1:1) |
| **Polymer G4** | MDI + P2010 | 1 mol% (PAA)Ge(OAc)₃ | 12% THF/toluene (1:1) |
| **Polymer G5** | MDI + P2010 | 5 mol% (PAA)Ge(OAc)₃ | 12% THF/toluene (1:1) |
| **Polymer G6** | IPDI + C2090 | 5 mol% Ge(OAc)₄ | in substance |
| **Polymer G7** | MDI + PEG400 | 1 mol% Ge(OAc)₄ | in substance |
| **Polymer B1** | MDI + P2010 | Without cat. | 12% THF/toluene (1:1) |
| **Polymer B2** | MDI + PEG400 | Without cat. | in substance |
| **Polymer D1** | MDI + P2010 | 1 mol% DABCO | 12% THF/toluene (1:1) |
| **Polymer D2** | MDI + P2010 | 5 mol% DABCO | 12% THF/toluene (1:1) |

The Polymers G1-5, G7, B1-2 and D1-2 were characterized regarding their molar weight distribution *via* GPC (see Table 8). Highest polydispersity index (PDI, PDI = Mw/Mn) and a high molecular weight (Mw) was obtained from Polymer G1 (Ge(OAc)₄ as catalyst). In this case the catalyst was not fully solved, therefore this high polydispersity is a logical consequence in relation to the lowered diffusion in this polymer solution. In general polyurethanes with this high PDI were well known and high interesting in various applications in relation to their high mechanical strength [11, 12]. From Polymer G2 and G3 a significantly lower PDI and Mw was obtained. From the kinetic investigation it is known that under Ge(OAc)₄ and PhGe(OAc)₃ catalysis the polyurethane formation is similar in this setup. The lower PDI of Polymer G3 formed under PhGe(OAc)₃ catalysis is matching with the high solubility in contrast to the homogeneous/ heterogeneous mixed with Ge(OAc)₄. In this case the polydispersity is related to the diffusion of the catalyst and due to the activity. The Polymers B1 and B2 were formed without catalyst and showed the lowest PDI. Moreover, the molar masses are also lower as of the polyurethanes with catalyst. This GPC measurement is in accordance with the observed material properties. Without catalyst the samples did not have a stable form and were very soft. In contrast, the samples with catalyst were form stable and significantly harder. Polymer D1 was formed as reference with 1 mol% of DABCO, resulting in a high poly disperse polymer. This observation is also matching with the theory of the sterically hindrance of larger catalyst molecules or heterogeneous catalyst parts. In case of Polymer D1, 1 mol% of DABCO as catalyst was used, in contrast to the germanium catalysts (5 mol%). If 5 mol% of DABCO were used (Polymer D2), a heterogeneous polymer (PDI >10.5) was formed which was not fully suitable for a GPC analysis.

**Table 8 - Overview of the GPC characterized polyurethane samples**

| **Polymer** | **Catalyst** | **Mw (g/mol)** | **Mn (g/mol)** | **PDI (Mw/Mn)** |
|---|---|---|---|---|
| **Polymer G1** | 5 mol% Ge(OAc)₄ | 226373 | 31135 | 7.27 |
| **Polymer G2** | 5 mol% Ge(OLau)₄ | 92931 | 44261 | 2.10 |
| **Polymer G3** | 5 mol% PhGe(OAc)₃ | 58818 | 35201 | 1.67 |
| **Polymer G4** | 1 mol% (PAA)Ge(OAc)₃ | 116660 | 60882 | 1.92 |
| **Polymer G5** | 5 mol% (PAA)Ge(OAc)₃ | 130530 | 39107 | 3.34 |
| **Polymer G7** | 1 mol% Ge(OAc)₄ | 11330 | 4796 | 2.36 |
| **Polymer B1** | Without cat. | 156228 | 83353 | 1.87 |
| **Polymer B2** | Without cat. | 4395 | 2573 | 1.71 |
| **Polymer D1** | 1 mol% DABCO | 254581 | 53131 | 4.79 |

### A.6.1.1 Spectroscopic Characterization of the Polyurethanes

All polyurethane samples were finally characterized *via* FT IR spectroscopy. From each building block one polymer example was selected for NMR spectroscopy. Polymer G1, G4, G6, B1 and B2 were characterized *via* NMR spectroscopy. The shifts are matching with the shifts of their building blocks [13]. The peaks of the urethane function were also found in FTIR spectra and NMR spectra, the C=O bond in the urethane group at 1730 cm⁻¹, the -NH function of the urethane in the ¹H-NMR spectra at 5.54 ppm. The FT IR spectra and NMR spectra of the corresponding polymers are similar and no significant differences were obtained from the spectroscopic investigation.

With this polyurethane samples, a practical example of novel germanium catalysis in material chemistry was shown. Moreover, the first time a similar active catalyst system to the known amine catalysts was shown and with this study the fundament of an industrial application is shown.

### A.6.2 Cotatalyis with Acetic Anhydride

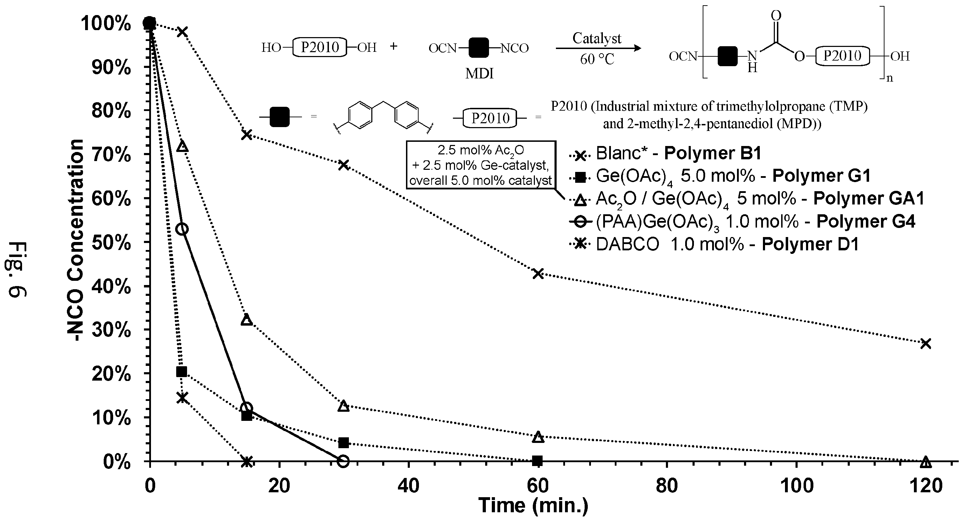

Similar to the model reaction, acetic anhydride (Ac₂O) was used as cocatalyst with Ge(OAc)₄ (each 2.5 mol%). The formed polyurethane (Polymer GA1) from polyol P2010 and MDI was formed significantly faster as in the blanc reaction (without catalyst). In comparison to (PAA)Ge(OAc)₃ 1 mol% the activity was higher. 5 mol% of Ge(OAc)₄ was also higher active as the cocatalyst system; the reason is the lower activity of Ac₂O in relation to Ge(OAc)₄. The results are illustrated in Fig. 6. These results are matching with the model experiments in the sections before. A possible explanation for the higher difference between (PAA)Ge(OAc)₃ and Ge(OAc)₄ / Ac₂O, but not being wished to be bound to a certain theory, is the limitation due to the lowered diffusion of the heterogeneous catalyst part of Ge(OAc)₄. Overall, with this block polymerization was the first time shown a way to lower the germanium catalyst load due to the use of a cheap cocatalyst. Polymer GA1 was characterized *via* FT IR spectroscopy and NMR spectroscopy, the ¹H-NMR shifts are in the expected range and the -NH function was found at 5.54 ppm. In the FT IR spectra the C=O bond in the urethane group at 1730 cm⁻¹ was also found, the other signals are matching with their building blocks and other similar polymers.

### A.6.3 Water Borne Polyurethane Formation

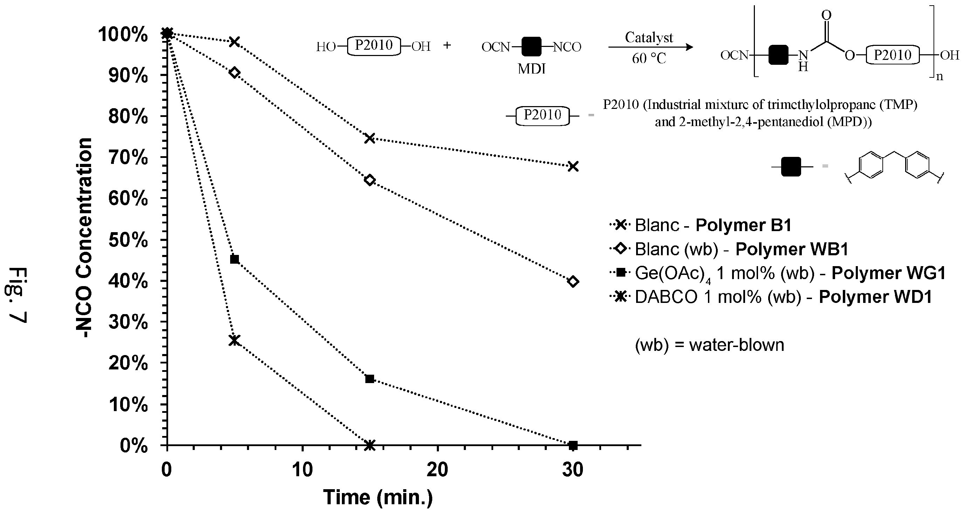

In polyurethane chemistry, the use of water as a blowing agent for PU foams is very common. In this work, Ge(OAc)₄ was used in the formation of water-blown PU. Analogous to the PU formation without water, polyol P2010 was reacted with MDI, additionally 12 w% THF, 0.22 w% water (based on the polymer mass) and 1 or 5 mol% Ge(OAc)₄ were added. The reaction was monitored by FT-IR spectroscopy. At 5 mol% catalyst, the reaction was completed in <5 min. This is a significantly higher conversion as non-water-blown polyurethanes under Ge(OAc)₄ catalysis. The Ge(OAc)₄ activity was higher in combination with water. For a kinetic tracking the 1 mol% Ge(OAc)₄ approach was used. A reaction acceleration from the Blanc in the presence of water was also obtained, DABCO accelerates the PU formation regardless of the amount of water, in this series of experiments. The results are illustrated in Fig. 7.

The polymers were characterized *via* FT IR spectroscopy and GPC (Table 9). In FT IR spectroscopy no significant differences between the water-blown and the not water-blown polymers was observed. Overall, can be in this section reported, Ge(OAc)₄ can be used as high active catalyst in water-blown polyurethane formations. The activity is similar to industrial standard catalysts such as DABCO.

**Table 9 - Overview of the GPC characterized water blown polyurethane samples**

| **Polymer** | **Catalyst** | **Mw (g/mol)** | **Mn (g/mol)** | **PDI (Mw/Mn)** |
|---|---|---|---|---|
| **Polymer WG1** | 1 mol% Ge(OAc)₄ | 27454 | 16074 | 1.71 |
| **Polymer WD1** | 1 mol% DABCO | 33871 | 20064 | 1.69 |
| **Polymer WB1** | - | 37273 | 21970 | 1.70 |

### A.6.4 Anionic Polyurethane Synthesis under Ge(OAc)₄ and (PAA)Ge(OAc)₃ Catalysis

Target of many projects in industry and academia is the reduction of VOCs emissions in the atmosphere. Polyurethanes that emulsify in water are the target of these developments. A prominent example are polyurethane coatings based on water. For this purpose, ionic groups are incorporated into the polymer backbone to achieve an ampholytic effect [14, 15]. Analog to literature an anionic polyurethane was formed from tartaric acid and MDI [14]. The synthesis of the anionic polyurethane samples is illustrated in Scheme 6. To demonstrate the application of this catalysts Ge(OAc)₄ (5 mol%) and ((PAA)Ge(OAc)₃ (1 mol%) were used. The formed polymers were emulsified afterwards in water and were characterized *via* FT IR spectroscopy. The corresponding peaks for the tartaric acid building block was found and were matching with the literature [16].

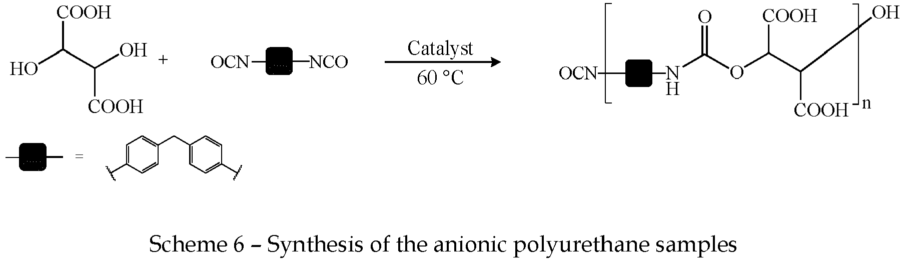

### A.7 Polyurethane Preparation in Solution and Ge(OAc)₄ Recycling

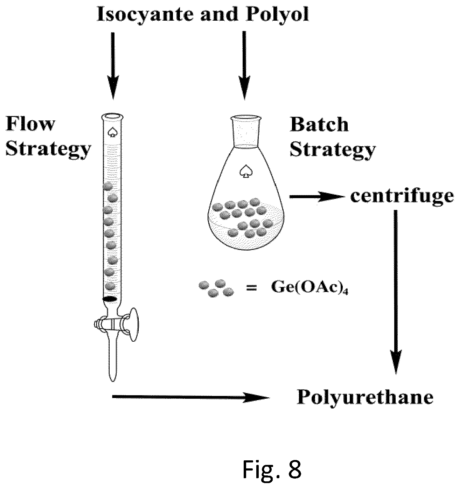

For lowering the viscosity of the polymer solution and for accelerating the diffusion, a solvent polymerization was tested. It could be demonstrated that recycling of the heterogeneous catalyst was possible. The catalyst was loaded in a column and the reaction was performed in a flow setup (Flow Strategy, Fig. 8). If the polymerization was done as a batch setup (Batch strategy, Fig. 8), the catalyst can be centrifuged off from the polymer solution. A complete solubility of the polymer is important for this application. Additionally, a moderate viscosity is needed to pump the polymer solution through the column or in the batch setup for the catalyst separation *via* centrifuging.

In both cases after solvent evaporation a polyurethane material was formed and was characterized *via* FT IR spectroscopy. In case of the batch strategy, the material was investigated more in detail. The polymer was characterized additionally *via* GPC analysis. Used was the common procedure of waterborne polyurethane formation, building blocks were MDI and PEG400, and THF was used as solvent. To use the full potential of the catalyst 15 mol% were used. For the separation of Ge(OAc)₄, decanting or centrifuging (5 min, 2000 1/min) was applied. Afterwards, the solvent was removed, and the residual prepolymer was quenched with water and dried in vacuum. Polymers with a usual molar mass distribution and a low polydispersity, PDI of 2.54, were resulting from this process (see Table 10). For both cases the germanium concentration in the polymer was determined *via* ICP OES, wherein the Ge concentration was in both cases relatively low. In case of decanting 2.9% Ge(OAc)₄ was leached out. In case of centrifuging 0.4% Ge(OAc)₄ was leached out.

With this hetero- and homogeneous mix catalyst principle a well working synthesis strategy was shown. Moreover, a germanium-based catalyst is shown which can mostly be recycled from the solution. This principle expands significantly the very small field of heterogeneous PU catalysts. Benefits of that principle is the high sustainability in relation to the multiple use of the catalyst and the lowered catalyst intercalation in the polymer. On the site of synthesis, the very easy synthesis and handling of the catalyst as a white powder which is air and water stable is a second benefit of this principle. The recycled Ge(OAc)₄ was used in 5 reaction cycles - after 2 h of reaction time, the polymerization was in all 5 cycles completed. The catalyst activity was stable in all 5 cycles.

**Table 10 - Overview of the GPC characterized solvent polymerized samples and the Ge concentration**

| **Polymer** | **Building blocks** | **Ge(OAc)₄** | **Method** | **Ge conc. mg/kg** |
|---|---|---|---|---|
| **Polymer SG1** | MDI + PEG400 | 15 mol% | in 75% THF, (Decanting) | 460 |
| **Polymer SG1** | MDI + PEG400 | 15 mol% | in 75% THF, (Centrifuging) | 60 |

| | | | | |
|---|---|---|---|---|
| *Mw = 19599 g*/*mol; PDI = 2.54 used catalyst mass: 71 g*/*kg PU* | | | | |

### A.8 Materials and Methods

Nitrogen was used as inert gas. For all operations standard Schlenk line techniques were used. The inert gas was passed through a molecular sieve (4 Å) and a layer of P₄O₁₀ with moisture indicator to remove trace water. All solvents were taken from an Innovative Technology^{®} solvent drying system, expected CDCl₃, CHCl₃ and C₆D₆. These solvents were distilled over P₄O₁₀ and stored under nitrogen. In addition, THF was distilled after the Innovative Technology^{®} solvent drying system under nitrogen and over lithium aluminium hydride (LAH).

Methanol, phenylisocyanate, MDI, PEG 400, acrylic acid, acrylic-acid-methyl ester and tetramethyldisiloxane (TMDS) were purchased from Sigma-Aldrich. GeCl₄ was purchased from abcr chemicals ltd. The polyols Kuraray P2010 and Kuraray C2090 were from Kuraray Europe GmbH.

### A.8.1 NMR Spectroscopy for Characterization

¹H (400.13 MHz) and ¹³C (100.61 MHz) were recorded on a Oxford NMR 400 spectrometer with a RS2D Pulse console. All spectra were measured at 25 °C, relative to TMS (*δ* = 0.00 ppm) the chemical shifts *δ* are given in parts per million (ppm). Coupling constants (J) are reported in Hertz (Hz). The letters s, d, t, q, m, bs, td, bm are used to indicate singlet, doublet, triplet, quadruplet, multiplet, broad singlet, triplet of doublet, broad multiplet.

### A.8.2 Synthesis of Ge(OAc)₄ and Ge(OLau)₄

In 120 mL Ac₂O was 5 mL (43.8 mmol) of GeCl₄ solved, the 4 eq. of the corresponding salt was added and the mixture was refluxed for 1 h. The solution was filtered to separate the corresponding chloride. Afterwards 70% of the Ac₂O was distilled off, the germanium tetracarboxylate was participating from the solution at 0 °C. After filtration the product was washed with ether and was dried in vacuum.

**Ge(OAc)₄:** 28.30 g (175.2 mmol) Ag(OAc) or 17.2 g (175.2 mmol) K(OAc). The product Ge(OAc)₄ was isolated as a white powder, yield 13.51 g (81%) ¹H-NMR (400.13 MHz, CDCl₃): 2.25 (s, 12H, -CH₃), ¹C-NMR (100.61 MHz, CDCl₃): 174.1 (-COO-), 20.3 (-CH₃) ppm.

**Ge(OLau)₄:** 42.0 g (175.2 mmol) K(OLau). The product Ge(OLau)₄ was isolated as a white powder, yield 27.9 g (73%), Numbering of the atoms: -COO- is C1 numbered to - CH₃ is C12. ¹H-NMR (400.13 MHz, CDCl₃): 2.49 (t, 8H, -(CH₂)-, C2), 1.71 (m, 8H, -(CH₂)-, C3), 1.32 (m, 64H, -(CH₂)₈-, C4 - C11), 0.93 (t, 12H, -CH₃, C12), ¹³C-NMR (100.61 MHz, CDCl₃): 169.66 (C1), 35.33 (C2), 31.94 (C3), 29.63 (C4), 29.61 (C5), 29.44 (C6), 29.37 (C7), 29.23 (C8), 29.91 (C9), 24.27 (C10), 22.72 (C11), 14.16 (C12) ppm.

### A.8.3 Synthesis of the Starting Materials (MeOOC(CH₂)₂GeCl₃ and HOOC(CH₂)₂GeCl₃)

A hydrogermylation reaction on HGeCl₃ was used to form these compounds.

HGeCl₃ * 2 Et₂O is formed *in situ,* analog to the literature [6]. MeOOC(CH₂)₂GeCl₃ and HOOC(CH₂)₂GeCl₃ were afterwards synthesized analog to the literature [5]. 5 mL (43.8 mmol) GeCl₄ in 50 mL ether were mixed in a Schlenk tube with 10 mL (56.7 mmol) TMDS and refluxed for 90 min. The formed complex HGeCl₃ * 2 Et₂O was separated from the bottom as a yellow oil. This oil was reacted at 0 °C in substance with the corresponding acryl derivative (acrylic acid or acrylic-acid-methyl ester). After 4 h of stirring the final product was dried in vacuum. ¹H and ¹³C - NMR shifts are matching with the literature [5].

### A.8.4 Synthesis of ClOC(CH₂)₂GeCl₃

ClOC(CH₂)₂GeCl₃ was synthesized analog to the literature [5]. 2 g (7.4 mmol) HOOC(CH₂)₂GeCl₃ in 20 mL THF were mixed in an Schlenk tube, with 2.67 mL (37.0 mmol) SOCl₂ and were refluxed for 4 h. All volatile compounds were evaporated and afterwards the remaining oil was dried in vacuum, ¹H and ¹³C - NMR shifts are matching with the literature [5].

### A.8.5 Synthesis of the Germanium Triacetates ((PAA)Ge(OAc)3, (PME)Ge(OAc)3 and PhGe(OAc)3)

In a 25 mL Schlenk flask under light exclusion the corresponding chloro germane was solved in 7 mL chloroform or toluene. Ag(OAc) or PhNH₃(OAc) was added and the formed white mixture was stirred for 3 h. The suspension was filtrated, the solvent was evaporated and the product was dried in vacuum for 1h. In case of an *in situ* preparation in solution, the AgCl or PhNH₃Cl was filtered off and the solution can be directly used as catalyst solution.

**(PAA)Ge(OAc)₃:** 150 mg (0.53 mmol) ClOC(CH₂)₂GeCl₃, 542 mg (3.36 mmol) Ag(OAc) or 324 mg (2.12 mmol) PhNH₃(OAc). The product (PAA)Ge(OAc)₃ was isolated as a colorless oil, yield 186 mg (91%), ¹H-NMR (400.13 MHz, CDCl₃): 2.99 (t, 2H, -COO-CH₂ -), 2.41 (t, 2H, -CH₂-Ge), 2.27 (s, 3H, H₃C-COO, anhydride) 2.20 (s, 9H, Ge-OOC-CH₃), ¹³C-NMR (100.61 MHz, CDCl₃): 174.38 ((Ge-OOC), 169.39 (-CH₂-COO-), 165.66 (H₃C-COO, anhydride), 28.60 (-OOC-CH₂-), 22.18 (H₃C-COO-CO), 21.07 (-CH₂-Ge), 20.45 (Ge-OOC-CH₃) ppm.

**(PME)Ge(OAc)₃:** 177 mg (0.67 mmol) MeOOC(CH₂)₂GeCl₃, 4̅8̅5̅ mg (3.01 mmol) Ag(OAc) or 308 mg (2.01 mmol) PhNH₃(OAc). The product (PME)Ge(OAc)₃ was isolated as a colorless oil, yield 213 mg (95%), ¹H-NMR (400.13 MHz, CDCl₃): 3.79 (s, 3H, H₃C-OOC), 2.86 (t, 2H, -COO-CH₂-), 2.44 (t, 2H,-CH₂-Ge), 2.17 (s, 9H, Ge-OOC-CH₃), ¹³C-NMR (100.61 MHz, CDCl₃): 176.21 (-COO-CH₂-),173.89 (Ge-COO-CH₃), 53.15 (H₃C-OOC), 27.28 (-OOC-CH₂-), 22.52 (-CH₂-Ge), 21.42 (OOC-CH₃) ppm.

**PhGe(OAc)₃:** 128 mg (0.50 mmol) PhGeCl₃, 364 mg (2.25 mmol) Ag(OAc) or 230 mg (1.5 mmol) PhNH₃(OAc). The product PhGe(OAc)₃ was isolated as a colorless oil, yield 158 mg (97%) ¹H-NMR (400.13 MHz, CDCl₃): 7.89 (d, 2H, o-phenyl), 7.53 (m, 3H, *m,p*-phenyl), 2.23 (s, 9H, -CH₃), ¹³C-NMR (100.61 MHz, CDCl₃): 173.69 (-COO-), 133.63 (o-phenyl), 132.51 (*p-*phenyl), 128.87 (*m*-phenyl), 21.19 (-CH₃) ppm.

**BuGe(OAc)₃:** 116 mg (0.49 mmol) BuGeCl₃, 364 mg (2.25 mmol) Ag(OAc) or 230 mg (1.5 mmol) PhNH₃(OAc). The product BuGe(OAc)₃ was isolated as a colorless oil, yield 158 mg (94%) ¹H-NMR (400.13 MHz, CDCl₃): 2.21 (s, 9H, -COO-CH₃), 2.18 (m, 2H, -CH₂-), 1.75 (m, 2H, -CH₂-), 1.43 (m, 2H, -CH₂-), 0.95 (t, 3H, -CH₃ (butyl)). ¹³C-NMR (100.61 MHz, CDCl₃): 174.2 (-COO-), 25.9 (-CH₂-), 24.8 (-CH₂-), 23.9 (-CH₂-), 21.27 (-COO-CH₃), 13.4 (-CH₃ (butyl)) ppm.

### A.8.6 NMR Spectroscopy for Kinetic Measurements (Bench Top NMR) - Reaction 1, 5 and 6

The time of 50% conversion of Reaction 1 and the conversion in Reaction 5/6 were determined *via* NMR spectroscopy using the following device and procedure. A series of ¹H spectra (60 MHz) were recorded on a Bench top NMR, Nanalysis NMReady-60e. Used application was "Kinetics package capabilities for reaction monitoring" from Nanalysis, each 18 s a spectra was recorded. All spectra were measured at 25 °C, relative to TMS (*δ* = 0.00 ppm) the chemical shifts *δ* are given in parts per million (ppm).

### A.8.6.1 Procedure of a Kinetic Measurement - Urethane and Esterification Formation - Reaction 1, 5 and 6

CDCl₃ was used as solvent for the kinetic NMR studies, the following solutions were used. Reaction 1: 3 M phenylisocyante, 3 M methanol, and the corresponding catalyst (1 mol% corresponds to 0.03 M). For Reaction 5 and 6: 1 M acetic anhydride and on the alcohol site 1 M methanol or 1 M t-butanol. 0.15 M (5 mol%) of the corresponding catalyst were used. In a NMR tube which was mounted in the bench top NMR, 0.2 mL of the starting materials and the catalyst solution were fast mixed. Immediately, the kinetic monitoring application was started and each 18 s a ¹H-NMR were recorded. The corresponding integral for the alcohol and the product was determined. This whole process was automatically done from the device and the application. After the measurement each NMR spectra series was checked *via* commercial NMR software due to their quality. Corresponding integrals in CDCl₃ for MeOH 3.60 - 3.20 ppm and for methyl-phenyl urethane 4.00 - 3.60 ppm; Corresponding integrals in CDCl₃ for MeOH 3.60 - 3.20 ppm and for the product 3.80 - 3.60 ppm; Corresponding integrals in CDCl₃ for Ac₂O 1.65 - 2.05 and for the products 2.05 - 2.45 ppm.

### A.8.7 FT IR Spectroscopy

FT IR spectra were recorded with a Bruker ALPHA, equipped with an ATR sample table. As software OPUS from Bruker was used. No baseline correction was used, the integration was referenced to the maximal peak of the spectra by OPUS automatically.

### A.8.7.1 Kinetic Investigation via FT IR Spectroscopy (Reaction 2)

In a 20 mL flask equipped with an inlet for argon flushing and a stirring bar, 0.51 g of MDI (2 mmol) was solved in 2.5 mL of toluene. 0.16 mL (4 mmol) of methanol and the catalyst (catalyst mass are mol% in relation to the methanol amount) were added, corresponding to the time a sample was taken out and was directly measured on the FT IR spectrometer. The characteristic for peak -NCO (2100 - 2500 cm⁻¹) was integrated.

### A.8.8 GPC (Gel Permeation Chromatography)

GPC (Gel Permeation Chromatography) was used from Shimadzu, equipped with two separating columns from MZ-Gel SD plus, 500 Å and 100 Å, linear 5 *µ*m; UV detector (SPD-20A) and RI detector (RID-20A) using chloroform as eluent. Poly(styrene) standards in the range of 350 to 17800 g/mol purchased from Polymer Standard Service were used for calibration.

### A.8.9 PU Preparation (Reaction 3) and afterwards Polyol Recycling (Reaction 4)

PU Preparation (Reaction 3): In a vial flushed with argon, 4 g (0.01 mol) of PEG 400 was mixed at 60 °C with the catalyst (Ge(OAc)₄, 12 mg, 1 mol% + Ac₂O, 10 mg, 1 mol%), after 10 min. 2.5 g (0.01 mol) of MDI was added and stirred for 15 min. The -NCO conversion was checked with FT IR spectroscopy. No -NCO peak was obtained in the FT IR spectrum after 15 min. After cooling to room temperature, the polymer mass was cured out for 4 days under air. The same procedure was used for the polyurethane preparation without catalyst (catalyst-free PU). Polyol recycling (Reaction 4): The catalyst-free PU was used as starting material. The corresponding catalyst (2 mol% DBTL 0.12 g (1 mmol) or 10 mol% Ge(OAc)₄), 0.65 g (1 mmol) of the catalyst-free PU and 7 mL of ethylene glycol were heated up to 100 °C for 3 h. After cooling down to room temperature the ethylene glycol was distilled of, the residue was centrifuged, and the recycled polyol was isolated as a slightly brownish oil. The recycled polyol was characterized regarding their molar mass *via* oligomer GPC analysis, and from these values the conversion was calculated.

### A.8.10 Transesterification and Polyester Preparation

### A.8.10.1 Ring Opening Polymerization (Reaction 7 and 8)

1 mmol of the corresponding cyclic compound (*ε*-caprolactone or lactide) was mixed with the catalyst, 10 w% of iso-propanol were added as initiator. According to Table 3 the mixtures were heated up. After cooling down, the conversion was determined *via* ¹H-NMR spectroscopy. Corresponding catalyst: 0.01 mmol DBTL, 0.05 mmol (PME)Ge(OAc)₃; 0.01 mmol (PAA)Ge(OAc)₃; 0.05 mmol (Ge(OAc)₄.

### A.8.10.2 Transesterification and Conversion Determination via GC MS

2 mL (20 mmol) of ethyl acetate were mixed with 5 mL (32 mmol) n-octanol. After adding of the catalyst, the mixture was heated up (see Table 3). After cooling down the concentration of n-octyl acetate was determined *via* GC MS. Used GC MS: Hewlett-Packard 6890 Series GC system coupled to a Hewlett-Packard 5973 Mass Selective Detector System; GC column: HP5 (30 m x 0.250 mm x 0.025 *µ*m) and helium as carrier gas (gas flow: 0.92726 mL/min). For injection, an auto sampler injection method at an injector temperature of 280 °C was used. MS conditions: positive EI ionization with an ionization energy of 70 eV and a full scan mode (50-500 m/z). The samples were diluted in cyclohexane in relation of 1:1000 from the reaction mixture.

### A.8.11 Silyl Ether Exchange and Sol Gel Reaction (Reaction 10 and 11)

### A.8.11.1 Sol Gel (Reaction 10)

0.62 g (3 mmol) of Si(OEt)₄, the corresponding catalyst, 0.11 mL of H₂O (6 mmol) and 0.62 g of EtOH were mixed. This mixture was stirred for 2 h and was afterwards cured out overnight. The formed sol gel material was a hard and brittle solid, in contrast to the reaction without a catalyst no reaction was observed. Corresponding Catalysts: 1 mol% DBTL 27 mg; 5 mol% Ge(OAc)₄ 46 mg; Ge(OAc)₄ 23 mg + 8 mg Ac₂O (corresponds in each case 2.5 mol%).

### A.8.11.2 Silyl Ether Exchange Reaction (Reaction 11)

208 mg (1 mmol) of Si(OEt)₄ were mixed with the corresponding catalyst and 32 mg (1 mmol) of MeOH in 2 mL of CDCl₃ were added. Corresponding catalyst: Ge(OAc)₄ 16 mg (5 mol%) or (PAA)Ge(OAc)₃ 4 mg (1 mol%). According to Table 4 the mixture was heated up. The conversion was determined *via* ¹H NMR spectroscopy.

### A.8.12 Preparation of the Polyurethane Samples (Polymers G, GA, B, D, W, SG, and IG)

### A.8.12.1 Polymers G, B, D, and W

In a 100 mL 3-necked-round-bottom flask equipped with a mechanical stirrer and under inert gas atmosphere the corresponding polyol (see Table 11) was heated up to 60 °C. The corresponding catalyst and solvent were added. This mixture was stirred for 5 min. After formation of a homogeneous mixture, the corresponding diisocyanate was added (also warmed to 60 °C). For the kinetic reaction tracking, corresponding to the time a sample was taken out and was directly measured on the FT IR spectrometer. The characteristic peak for -NCO (2100 - 2500 cm⁻¹) was integrated. After 2h, the solvent was removed under vacuum and the polymer was cured out for 4 days under air. For the water blown Polymers WB1, WG1, WD1: 10 *µ*L of H₂O was added to the polyol.

### A.8.12.2 Polymer IG

In a 25 mL 3-necked-round-bottom flask equipped with a mechanical stirrer tartaric acid (see Table 11) was heated up to 60 °C. The corresponding catalyst and solvent were added and stirred for 15 min. After formation of a homogeneous mixture, MDI was added. After 1h, the solvent was removed under vacuum and the polymer was cured out for 4 days under air.

### A.8.12.3 Polymer SG

In a 50 mL Schlenck tube at 60 °C, 30 mL of THF were mixed with 4.00 g of PEG400. 460 mg of Ge(OAc)₄ were suspended for 15 min. 2.5 g of MDI were added and stirred for 2 h. Related to the method the Ge(OAc)₄ was decanted off or centrifuged off (5 min., 2000 1/min). The solvent was evaporated and the polymers were able to cure out 4 days under room temperature. From these polymers the Ge concentration was directly determined *via* ICP OES.

**Table 11 - Masses of starting materials and catalysts in the polyurethane preparation**

| **Polymer** | **Diisocyante** | **Polyol** | **Catalyst** | | **Solvent** |
|---|---|---|---|---|---|
| **Polymer G1** | 0.51 g (2.04 mmol) MDI | 4.08 g (2.04 mmol) P2010 | 31.4 mg | (5 mol% Ge(OAc)₄) | 0.7 mL THF/toluene (1:1) |
| **Polymer G2** | 0.51 g (2.04 mmol) MDI | 4.08 g (2.04 mmol) P2010 | 88.6 mg | (5 mol% Ge(OLau)₄) | 0.7 mL THF/toluene (1:1) |
| **Polymer G3** | 0.51 g (2.04 mmol) MDI | 4.08 g (2.04 mmol) P2010 | 33.3 mg | (5 mol% PhGe(OAc)₃) | 0.7 mL THF/toluene (1:1) |
| **Polymer G4** | 0.51 g (2.04 mmol) MDI | 4.08 g (2.04 mmol) P2010 | 7.4 mg | (1 mol% (PAA)Ge(OAc)₃) | 0.7 mL THF/toluene (1:1) |
| **Polymer G5** | 0.51 g (2.04 mmol) MDI | 4.08 g (2.04 mmol) P2010 | 37.2 mg | (5 mol% (PAA)Ge(OAc)₃) | 0.7 mL THF/toluene (1:1) |
| **Polymer G6** | 0.45 g (2.04 mmol) IPDI | 4.08 g (2.04 mmol) C2090 | 31.4 mg | (5 mol% Ge(OAc)₄) | in substance |
| **Polymer G7** | 2.50 g (10.0 mmol) MDI | 4.00 g (10.0 mmol) PEG400 | 30.8 mg | (1 mol% Ge(OAc)₄) | in substance |
| **Polymer B1** | 0.51 g (2.04 mmol) MDI | 4.08 g (2.04 mmol) P2010 | | without catalyst | 0.7 mL THF/toluene (1:1) |
| **Polymer B2** | 2.50 g (10.0 mmol) MDI | 4.00 g (10 mmol) PEG400 | | without catalyst | in substance |
| **Polymer D1** | 0.51 g (2.04 mmol) MDI | 4.08 g (2.04 mmol) P2010 | 2.3 mg | (1 mol% DABCO) | 0.7 mL THF/toluene (1:1) |
| **Polymer D2** | 0.51 g (2.04 mmol) MDI | 4.08 g (2.04 mmol) P2010 | 11.4 mg | (5 mol% DABCO) | 0.7 mL THF/toluene (1:1) |
| **Polymer GA1** | 0.51 g (2.04 mmol) MDI | 4.08 g (2.04 mmol) P2010 | 15.7 mg Ge(OAc)₄ | (2.5 mol% Ge(OAc)₄) | 0.7 mL THF/toluene (1:1) |
| | | | 5.2 mg Ac₂O | (2.5 mol% Ac₂O) | |
| **Polymer WG1** | 0.51 g (2.04 mmol) MDI | 4.08 g (2.04 mmol) P2010 | 31.4 mg | (5 mol% Ge(OAc)₄) | 0.7 mL THF + 10 mg H₂O |
| **Polymer WD1** | 0.51 g (2.04 mmol) MDI | 4.08 g (2.04 mmol) P2010 | 2.3 mg | (1 mol% DABCO) | 0.7 mL THF + 10 mg H₂O |
| **Polymer WB1** | 0.51 g (2.04 mmol) MDI | 4.08 g (2.04 mmol) P2010 | | without catalyst | 0.7 mL THF + 10 mg H₂O |
| **Polymer IG1** | 2.50 g (10.0 mmol) MDI | 1.50 g (10.0 mmol) Tartaric acid | 30.8 mg | (5 mol% Ge(OAc)₄) | 0.7 mL THF/toluene (1:1) |
| **Polymer IG2** | 2.50 g (10.0 mmol) MDI | 1.50 g (10.0 mmol) Tartaric acid | 36.5 mg | (1 mol% (PAA)Ge(OAc)₃) | 0.7 mL THF/toluene (1:1) |
| **Polymer SG1** | 2.50 g (10.0 mmol) MDI | 4.00 g (10.0 mmol) PEG400 | 460 mg | (15 mol% Ge(OAc)₄) | 30 mL THF |
| **Polymer SG2** | 2.50 g (10.0 mmol) MDI | 4.00 g (10.0 mmol) PEG400 | 460 mg | (15 mol% Ge(OAc)₄) | 30 mL THF |

### B. Germanium mono- and dicarboxylates

Chapter B of the experimental data deals with the synthesis, the analysis and use of germanium mono- and dicarboxylates.

The catalytic activity of Et₂Ge(OAc)₂ and Ph₂Ge(OAc)₂ in the urethane formation are known from the designated inventor's master thesis [3]. The acceleration in relation to the reaction without catalyst was described in said Master Thesis with 3.6 times. This factor is in relation to an industrial application not high enough and needs to be improved significantly. In the study of Chapter B, the use of carboxylic acid anhydrides as cocatalyst a significant improvement of catalytic activity could be demonstrated.

### B.1 Synthesis of the Catalysts

As carboxylate substituents acetates and laurates were used in this section. The corresponding germanium acetates and laurates were synthesized, similar to a method of Komanduri (Scheme 7) [17]. The corresponding chloro germanes were used as starting material. As salt metathesis partner sodium, potassium or silver(I) carboxylates were used. All formed germanium carboxylates were isolated in good yields of over 86%. The characterization was done *via* ¹H- and ¹³C-NMR spectroscopy. The compound Bu₃Ge(OLau) is not known in literature. In this study, the following compounds were isolated: Bu₃Ge(OLau), Bu₃Ge(OAc), Me₂Ge(OAc)₂, Et₂Ge(OAc)₂, and Ph₂Ge(OAc)₂. As an alternative way, the catalyst was directly synthesized in the solvent of the urethan formation and after filtration of the chloride salts, and the obtained reaction-solution was directly ready to use as catalyst solution.

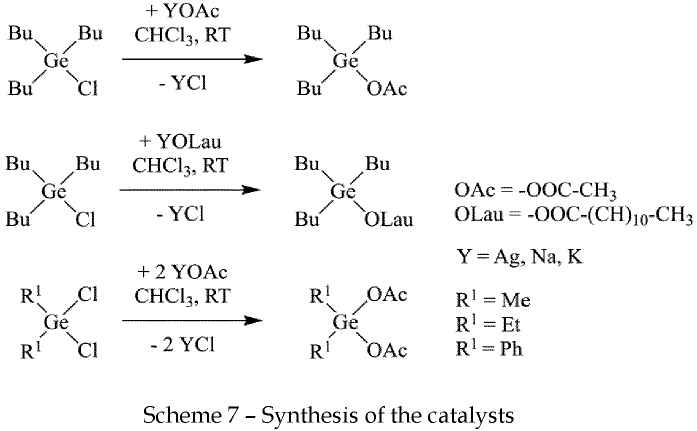

### B.2 Catalysis Tests - Application in Urethane Chemistry

Phenyl isocyanate (Reaction 1) was reacted with methanol to form a urethane, analog to the experiments in Chapter A above (see also Scheme 8 below). Reaction 1 were catalyzed by Bu₃Ge(OLau), Me₂Ge(OAc)₂, Et₂Ge(OAc)₂, Ph₂Ge(OAc)₂. As reference the common catalysts DBTL and DABCO were investigated. Reaction 1 was tracked *via* NMR spectroscopy. First, all compounds were measured without any cocatalyst (Table 12, Reaction 1, a-g). Ac₂O (Table 12, Reaction 1, h) was investigated alone, a moderate activity was observed. Second step was the catalysis test under the use of a mix of Ac₂O and the germanium catalyst (Table 12, Reaction 1, j-n). In combination with Ac₂O and germanium catalyst, the conversion of phenylisocyanate was faster as without cocatalyst Ac₂O. Third step was the catalysis test under the use of a mix of further anhydrides and the germanium catalyst ((Table 12, Reaction 1, o-q). Used anhydrides were the asymmetric anhydride acetic lauric anhydride (AcOLau, CH₃-C(O)O(O)C-(CH₂)₁₀CH₃), the cyclic anhydride succinic anhydride (SUA) and heptanoic anhydride (Hea₂O) as a C7 symmetric anhydride. Furthermore in these cases the catalyst load of the anhydride cocatalyst was variated (see Table 12). In combination with AcOLau and the germanium catalyst, the conversion of phenylisocyanate was faster as without cocatalyst and the acceleration was similar as from Ac₂O observed. SUA and Hea₂O showed a lower cocatalyst activity, however a positive acceleration was as well observed in comparison to a reaction without cocatalyst. If all reactions were compared, the longest conversion time for 50% product was observed from BusGe(OAc) / Ac₂O and the shortest time was observed from Et₂Ge(OAc)₂ / Ac₂O and Me₂Ge(OAc)₂ / AcOLau. These results were matching with the results without cocatalyst Ac₂O (Table 12, Reaction 1 a-e). With a conversion time of 12 min, for 50% product, the mix Et₂Ge(OAc)₂ / Ac₂O and Me₂Ge(OAc)₂ / AcOLau showed a suitable activity for an industrial application. In comparison of the germanium dicarboxylates with the tricarboxylates from Chapter A, the mixture of dicarboxylate/anhydrides are similar active as the triacetates without cocatalyst. Overall, with this study a useful co-catalysis with carboxylic anhydrides was shown. Additionally with Bu₃Ge(OLau), Bu₃Ge(OAc) and Me₂Ge(OAc)₂ novel catalysts were presented. According to the inventors' and the applicant's best knowledge, the germanium catalyst mixtures with carboxylic anhydrides were not known in literature.

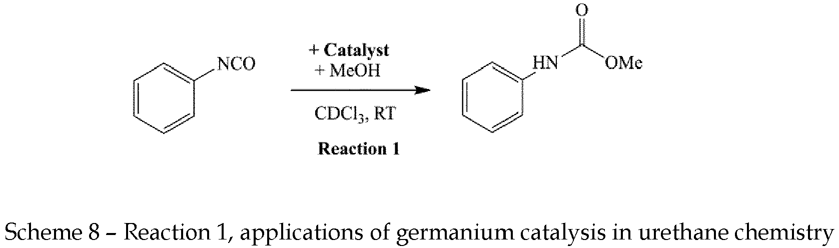

**Table 12 - Results of the reaction screening (Reaction 1); *) % of product amount of catalyst in mol%; 2*) % of product, with the corresponding catalyst; 3*) without any catalyst; Ac₂O = acetic anhydride; AcOLau = acetic lauric anhydride CH₃-C(O)O(O)C-(CH₂)₁₀CH₃; SUA = succinic anhydride; Hea₂O = heptanoic anhydride;**

| **#** | **#** | **Reaction and Conditions** | | **mol %*** | **Catalyst** | **with cat. 2*** | **without cat. 3*** |
|---|---|---|---|---|---|---|---|
| | **a** | | 38 min., RT | 1 | Bu₃Ge(OAc) | 50% | 42% |
| | **b** | | 33 min., RT | 1 | Bu₃Ge(OLau) | 50% | 40% |
| | **c** | | 16 min., RT | 1 | Me₂Ge(OAc)₂ | 50% | 23% |
| **1** | **d** | PhNCO + MeOH → Ph(NH)CO(OMe) | 17 min., RT | 1 | Et₂Ge(OAc)₂ | 50% | 25% |
| | **e** | | 16 min., RT | 1 | Ph₂Ge(OAc)₂ | 50% | 23% |
| | **f** | | << 50 s, RT | 1 | DBTL | 50% | < 2% |
| | **g** | | 2 min., RT | 1 | DABCO | 50% | 5% |

| **h** | 39 min., RT | 1 | Ac₂O | 50% | 42% | | |
|---|---|---|---|---|---|---|---|
| **j** | 27 min., RT | 2 | Bu₃Ge(OAc) (1 mol%) + Ac₂O (1 mol%) | 50% | 31% | | |
| **k** | 23 min., RT | 2 | BusGe(OLau) (1 mol%) + Ac₂O (1 mol%) | 50% | 35% | | |
| **l** | 13 min., RT | 2 | Me₂Ge(OAc)₂ (1 mol%) + Ac₂O (1 mol%) | 50% | 20% | | |
| **m** | 12 min., RT | 2 | Et₂Ge(OAc)₂ (1 mol%) + Ac₂O (1 mol%) | 50% | 16% | | |
| **n** | 14 min., RT | 1 | Ph₂Ge(OAc)₂ (1 mol%) + Ac₂O (1 mol%) | 50% | 22% | | |
| **o** | 12 min., RT | 2 | Me₂Ge(OAc)₂ (1 mol%) + AcOLau (1 mol%) | 50% | 16% | | |
| **p** | 15 min., RT | 5 | Me₂Ge(OAc)₂ (1 mol%) + SUA (4 mol%) | 50% | 22% | | |
| **q** | 15 min., RT | 3 | Me₂Ge(OAc)₂ (1 mol%) + Hea₂O (2 mol%) | 50% | 22% | | |

### B.3 Materials and Methods

Nitrogen was used as inert gas, for all operations standard Schlenk line techniques were used. The inert gas was passed through a molecular sieve (4 Å) and a layer of P₄O₁₀ with moisture indicator to remove trace water. All solvents were taken from an Innovative Technology^{®} solvent drying system, except CDCl₃, CHCl₃ and C₆D₆. These solvents were distilled over P₄O₁₀ and stored under nitrogen. In addition, THF was distilled after the Innovative Technology^{®} solvent drying system under nitrogen and over LAH. Methanol and phenylisocyanate, were purchased from Sigma-Aldrich. Acetic anhydride was purchased from Carl Roth GmbH. The chloro germanes were purchased from abcr europe ltd. Acetic anhydride (Ac₂O), succinic anhydride (SUA) and acetic lauric anhydride (CH₃-C(O)O(O)C-(CH₂)₁₀CH₃, AcOLau) were purchased from Sigma-Aldrich. Heptanoic anhydride (Hea₂O) were purchased from Honeywell Fluka^{™}.

### B.3.1 NMR Spectroscopy for Characterization

¹H (400.13 MHz) and ¹³C (100.61 MHz) were recorded on a Oxford NMR 400 spectrometer with a RS2D Pulse console. All spectra were measured at 25 °C, relative to TMS (*δ* = 0.00 ppm) the chemical shifts *δ* are given in parts per million (ppm). Coupling constants (J) are reported in Hertz (Hz). The letters s, d, t, q, m, bs, td, bm are used to indicate singlet, doublet, triplet, quadruplet, multiplet, broad singlet, triplet of doublet, broad multiplet.

### B.3.2 Synthesis of Dimethylgermanium diacetate (Me₂Ge(OAc)₂)

In relation to the volatility of dimethylgermanium acetate, the following procedure was used. In a 50 mL Schlenk flask, 275 mg (1.59 mmol) dimethyl-dichloro germane was solved in 10 mL DCM. 585 mg (3.50 mmol) silver acetate (Ag(OAc)) was added, and the formed white mixture was stirred for 6 h. The suspension was filtrated, at 200 mbar the DCM was distilled off and the product was dried in vacuum for 1h at 150 mbar. Yield: 94 % (329 mg) ¹H-NMR (400.13 MHz, C₆D₆): 1.70 (s, 6H, C2), 0.80 (s, 6H, C3), ¹³C-NMR (100.61 MHz, C₆D₆): 174.46 (C1), 20.79 (C2), 3.50 (C3) ppm.

### B.3.3 Synthesis of the Germanium Carboxylates Bu₃Ge(OAc), Bu₃Ge(OLau), Ph₂Ge(OAc)₂ and Et₂Ge(OAc)₂

In a 50 mL Schlenk flask, the corresponding chloro germane was solved in 6 mL chloroform. The corresponding carboxylate salt was added (2.5 eq. of Ag(OAc), Na(OAc) or K(OAc) in case of diacetates; 1.3 eq. of Ag(OAc), Na(OAc) or K(OAc) in case of monoacetates; 1.5 eq. K(OLau) in case of laurates. Resulting was a white mixture which was stirred for 4 h. The suspension was filtrated, and the product was isolated by evaporation of the solvent. The product was dried in vacuum for 4h. As alternative way, the catalyst was directly synthesized in the solvent of the urethane formation and after filtration of the chloride salts, the reaction-solution was directly ready to use (without evaporation of the solvent).

**Tributyl-germanium laurate (Bu₃Ge(OLau)):** Bu₃GeCl: 208 mg; yield: 93 % (307 mg); Numbering of the atoms: -COO- is C1 numbered to -CH₃ is C12; ¹H-NMR (300.22 MHz, CDCl₃): 2.31 (t, 4H, C2), 1.38 (bm, 4H, C13, C14), 1.30 (bm, 48H, C3-C11), 1.20 (m, 6H, C11), 1.20 (m, 2H, C15), 0.93 (m, 3H, C12), 0.93 (m, 9H, C16), ¹³C-NMR (75.50 MHz, CDCl₃): 177.07 (C1), 35.63 (C2) 31.91 (C3), 29.47 (C4), 29.34 (C5), 29.30 (C6), 29.22 (C7), 26.16 (C8), 25.99 (C9), 25.49 (-CH₂-, butyl), 22.61 (C10), 18.65 (C11), 16.11 (2C, -CH₂-, butyl), 14.15 (C12), 13.69 (-CH₃, butyl) ppm.

**Tributyl-germanium acetate (Bu₃Ge(OAc)):** Bu₃GeCl: 219 mg; yield: 89 % (211 mg), ¹H-NMR (400.13 MHz, CDCl₃): 2.06 (s, 3H, -OOC-CH₃), 1.45 (m, 12H, -CH₂-, butyl), 1.17 (t, 6H, - CH₂-, butyl), 0.94 (t, 9H, -CH₃-, butyl), ¹³C-NMR (100.61 MHz, CDCl₃): 25.96 (-CH₂-, butyl), 22.32 (-OOC), 15.98 (-CH₂-, butyl) 13.62 (-CH₃, butyl), ppm.

**Diphenyl-germanium diacetate (Ph₂Ge(OAc)₂):** Ph₂GeCl₂: 251 mg; yield: 86 % (250 mg), ¹H-NMR (400.13 MHz, C₆D₆): 7.92 (q, 4H, o-phenyl), 7.12 (q, 6H, *m,p*-phenyl), 1.69 (s, 6H, -CH₃), ¹³C-NMR (100.61 MHz, C₆D₆): 173.89 (-OOC-), 134.09 (o-phenyl), 131.13 (p-phenyl), 128.44 (m-phenyl), 20.58 (-CH₃) ppm.

**Diethyl-germanium diacetate (Et₂Ge(OAc)₂):** Et₂GeCl₂: 241 mg; yield: 88 % (199 mg), ¹H-NMR (400.13 MHz, C₆D₆): 1.47 (s, 6H, -OOC-CH₃), 1.20 (q, 4H, -CH₂-CH₃), 0.83 (t, 6H, -CH₂-CH₃), ¹³C-NMR (100.61 MHz, C₆D₆): 174.59 (-OOC-), 20.57 (-OOC-CH₃), 12.83 (-CH₂-CH₃), 6.69 (-CH₂-CH₃) ppm.

### B.3.4 NMR Spectroscopy for Kinetic Measurements (Bench Top NMR)

The time of 50% conversion of Reaction 1 were determined *via* NMR spectroscopy using the following device and procedure. A series of ¹H spectra (60 MHz) were recorded on a Bench top NMR, Nanalysis NMReady-60e. Used application was "Kinetics package capabilities for reaction monitoring" from Nanalysis, each 18 s a spectra was recorded. All spectra were measured at 25 °C, relative to TMS (*δ* = 0.00 ppm) the chemical shifts *δ* are given in parts per million (ppm).

### B.3.4.1 Procedure of Kinetic Measurement - Urethane Formation

CDCl₃ was used as solvent for the kinetic NMR studies, following solution were used. Reaction 1: 3 M phenylisocyanate, 3 M methanol, and the corresponding catalyst (1 mol% corresponds to 0.03 M). In a NMR tube which was mounted in the bench top NMR, 0.2 mL of the starting materials and the catalyst solution were fast mixed. Immediately the kinetic monitoring application was started and each 18 s an ¹H-NMR were recorded. The corresponding integral for the alcohol and the product was determined. This whole process was automatically done from the device and the application. After the measurement each NMR spectra series was checked *via* commercial NMR software due to their quality. Corresponding integrals in CDCl₃ for methanol 3.60 - 3.20 ppm and for methyl-phenyl urethane 4.00 - 3.60 ppm.

The foregoing examples and described embodiments have been set forth merely to illustrate the invention and are not intended to be limiting. Since modifications of the disclosed embodiments incorporating the substance of the invention may occur to those skilled in the art, the invention should be construed to include everything within the scope of the appended claims.

### REFERENCES

[1] H. H. Anderson, "Monoethylgermanium and Alkylsilicon Esters. Dimethylgermanium Diacetate". In: Journal of the American Chemical Society (1952), 74, pp. 2371-2372
[2] Jong Shik Chung. "Correlation of acidity of metal ion with catalytic activity for the formation of poly (ethylene terephthalate)". In: Korean Journal of Chemical Engineering 6 (1989), pp. 354-356
[3] Garstenauer Christoph, Master Thesis, 2021, " SYNTHESIS OF ORGANOGERMANIUM CATALYSTS AND CATALYST PRECURSORS FOR THE POLYURETHANE FORMATION" TU Graz (Austria).
[4] VI Zhun', IV Sbitneva, and EA Chernyshev. "Reaction of Germanium Tetrachloride with Chloro (phenyl) silanes in the Presence of Aluminum Chloride". In: Russian journal of general chemistry 75 (2005), pp. 867-869.
[5] Chun Li Zhang, Tai Hua Li, Shuang Huan Niu, Rong Fu Wang, Zhan Li Fu, Feng Qin Guo, Ming Yang, et al. "Synthesis and evaluation of novel organogermanium sesquioxides as antitumor agents". In: Bioinorganic Chemistry and Applications 2009 (2009), Article ID 908625.
[6] Samuel Heimann, Malgorzata Holynska, and Stefanie Dehnen. "Synthesis, Structures, and LightInduced Transformation of Keto-Functionalized Selenidogermanate Complexes". In: Zeitschrift fuer anorganische und allgemeine Chemie 638.11 (2012), pp. 1663-1666.
[7] AM Al-Sabagh, FZ Yehia, Gh Eshaq, AM Rabie, and AE ElMetwally. "Greener routes for recycling of polyethylene terephthalate". In: Egyptian Journal of Petroleum 25.1 (2016), pp. 53-64.
[8] Sourav Kumar Das, Saeideh Kholghi Eshkalak, Amutha Chinnappan, Rituparna Ghosh, WADM Jayathilaka, Chinnappan Baskar, and Seeram Ramakrishna. "Plastic recycling of polyethylene terephthalate (PET) and polyhydroxybutyrate (PHB)-A comprehensive review". In: Materials Circular Economy 3.1 (2021), p. 9.
[9] Joshua Seth Cannon, Coralie Mckenna Fleenor, Scott Ellery George, Huamin HU, Mark Allan Treece, Carolin Adelheid VOGEL, Matthew Robert KITA, Jason Scott WOODS, Jonathan Michael HORTON, "Process of making a copolyester with germanium catalyst", Patent Application: WO2023034117A1 (2022).
[10] C Gertig, E Erdkamp, A Ernst, C Hemprich, L Kröger, J Langanke, A Bardow, K Leonhard. "Reaction Mechanisms and Rate Constants of Auto-Catalytic Urethane Formation and Cleavage Reactions". In: ChemistryOpen 10 (2021), pp. 534-544
[11] Caiguo Gong and Harry W Gibson. "Controlling polymeric topology by polymerization conditions mechanically linked network and branched poly (urethane rotaxane)s with controllable polydispersity". In: Journal of the American Chemical Society 119.37 (1997), pp. 8585-8591.
[12] Junjie Bao, Gaojian Shi, Can Tao, Chao Wang, Chen Zhu, Liang Cheng, Gang Qian, and Chunhua Chen. "Polycarbonate-based polyurethane as a polymer electrolyte matrix for all-solid-state lithium batteries". In: Journal of Power Sources 389 (2018), pp. 84-92.
[13] V Rek and M Bravar. "Ultraviolet degradation of polyester-based polyurethane". In: Journal of Elastomers & Plastics 15.1 (1983), pp. 33-42.
[14] ME Victoria Hormaiztegui, Mirta I Aranguren, and Veronica L Mucci. "Synthesis and characterization of a waterborne polyurethane made from castor oil and tartaric acid". In: European Polymer Journal 102 (2018), pp. 151-160.
[15] Kibret Mequanint and Ronald Sanderson. "Hydrolytic stability of nano-particle polyurethane dispersions: Implications to their long-term use". In: European polymer journal 42.5 (2006), pp. 1145- 1153.
[16] NIST. (R,R)-Tartaric acid in NIST Database. 8/2023. URL: https://webbook.nist.gov/cgi/cbook.cgi?ID=C87694&Mask=80.
[17] Komanduri P., Schrick C., Feasley L., Dufresne P., and Charles S. "Photodecompostion of the Oligogermanes n-Bu3GeGePh2GenBu3 and nBu3GeGePh3: Identification of the Photoproducts by Spectroscopic and Spectrometric Methods". In: European Journal of Inorganic Chemistry 2016.19 (2016), pp. 3196-3203. DOI: https://doi.org/10.1002/ejic.201600421.

## Claims

1. A composition comprising at least one organogermanium(IV) carboxylate and at least one organic acid anhydride, wherein the at least one organogermanium(IV) carboxylate is represented by the following formula (I):
((R₁)ₓ)Ge((OOC-R₂)₄₋ₓ) **(I)**
wherein
the index "x" is 0, 1, 2 or 3;
R₁ is selected from the group consisting of optionally: substituted C1 - C12 alkyl, optionally substituted C2 - C10 alkenyl, optionally substituted C2 - C12 alkinyl, optionally substituted C3 - C12 cycloalkyl, optionally substituted C3 - C12 cycloalkenyl, optionally substituted C5 - C16 aryl, optionally substituted C5 - C15 heteroaryl, optionally substituted 5 to 8 membered heteroaryl, and optionally substituted -(C0-C10)-COOR₃;
R₃ is selected from the group consisting of: hydrogen, optionally substituted C1-C12 alkyl, optionally substituted C2-C12 alkenyl, optionally substituted C2-C12 alkinyl, optionally substituted C3-C12 cycloalkyl, optionally substituted C3-C12 cycloalkenyl, optionally substituted C5 - C16 aryl, optionally substituted C5 - C15 heteroaryl, and optionally substituted 5 to 8 membered heteroaryl;
R₂ is selected from the group consisting of: optionally substituted C1 - C24 alkyl, substituted C1-C24 alkyl, optionally substituted C2 - C24 alkenyl, optionally substituted C2 - C24 alkinyl, optionally substituted C3 - C24 cycloalkyl, optionally substituted C3 - C24 cycloalkenyl, optionally substituted C5 - C16 aryl, optionally substituted C5 - C15 heteroaryl, and optionally substituted 5 to 8 membered heteroaryl.

2. The composition according to claim 1, wherein R₁ is selected from the group consisting of phenyl, methyl, ethyl, butyl, and -(CH₂)₂-COOMe.

3. The composition according to claim 1 or 2, wherein R₂ is selected from the group consisting of -CH₃ and -(CH₂)₁₀-CH₃.

4. The composition according to any one of claims 1 to 3, wherein the at least one organogermanium(IV) carboxylate is selected from the group consisting of: Ge(OAc)₄, Ge(OLau)₄, CH₃O(O)C(CH₂)₂Ge(OAc)₃, PhGe(OAc)₃, BuGe(OAc)₃, Bu₃Ge(OAc), Bu₃Ge(OLau), Me₂Ge(OAc)₂, Et₂Ge(OAc)₂, Ph₂Ge(OAc)₂, and a combination thereof.

5. The composition according to any one of claims 1 to 4, wherein the at least one organic acid anhydride is represented by the following formula (II):
R_{B}-COO-(O)C-R_{A} (II)
wherein
R_{A} and R_{B} are not covalently connected with each other, or
R_{A} and R_{B} are covalently connected with each other to form a cyclic organic anhydride, or
wherein the organic acid anhydride is a polymeric anhydride comprising at least two organic acid anhydrides of formula (II) which are covalently connected with each other via R_{A} and/or R_{B};
R_{A} is selected from the group consisting of: optionally substituted C1 - C18 alkyl, optionally substituted C5 - C16 aryl, substituted C1-C24 alkyl, optionally substituted C2 - C24 alkenyl, optionally substituted C2 - C24 alkinyl, optionally substituted C3 - C24 cycloalkyl, optionally substituted C3 - C24 cycloalkenyl, optionally substituted C5 - C15 heteroaryl, and optionally substituted 5 to 8 membered heteroaryl;
R_{B} is selected from the group consisting of: optionally substituted C1 - C18 alkyl, optionally substituted C5 - C16 aryl, substituted C1-C24 alkyl, optionally substituted C2 - C24 alkenyl, optionally substituted C2 - C24 alkinyl, optionally substituted C3 - C24 cycloalkyl, optionally substituted C3 - C24 cycloalkenyl, optionally substituted C5 - C15 heteroaryl, and optionally substituted 5 to 8 membered heteroaryl.

6. The composition according to claim 5, wherein the organic acid anhydride is acetic anhydride (Ac₂O), succinic anhydride (SUA), acetic lauric anhydride (CH₃-C(O)O(O)C-(CH₂)₁₀CH₃, AcOLau) or heptanoic anhydride (Hea₂O).

7. The composition according to any one of claims 1 to 6, wherein the molar ratio of the at least one organogermanium(IV) carboxylate and the organic acid anhydride is between 1:0.1 and 1:50, more preferably about 1:10, most preferably about 1:1.

8. An organogermanium(IV) tricarboxylate compound represented by the following formula (III):
(R₄)Ge((OOC-R₅)₃) **(III)**
wherein
R₄ is a substituent comprising an organic acid anhydride moiety;
R₅ is selected from the group consisting of: optionally substituted C1- C18 alkyl, substituted C1-C12 alkyl, optionally substituted C2 - C12 alkenyl, optionally substituted C2 - C12 alkinyl, optionally substituted C3 - C12 cycloalkyl, optionally substituted C3 - C12 cycloalkenyl, optionally substituted C5 - C16 aryl, optionally substituted C5 - C15 heteroaryl, and optionally substituted 5 to 8 membered heteroaryl.

9. The organogermanium(IV) tricarboxylate compound according to claim 8, wherein
R₄ is -(CHR₇)ₙ-COO-C(O)R₆
the index "n" is zero or is an integer between 1 and 28;
R₆ is selected from the group consisting of: hydrogen, optionally substituted C1 - C18 alkyl, substituted C1-C12 alkyl, optionally substituted C2 - C12 alkenyl, optionally substituted C2-C12 alkinyl, optionally substituted C3 - C12 cycloalkyl, optionally substituted C3 - C12 cycloalkenyl, optionally substituted C5 - C16 aryl, optionally substituted C5 - C15 heteroaryl, and optionally substituted 5 to 8 membered heteroaryl;
R₇ is selected from the group consisting of: hydrogen, optionally substituted C1 - C18 alkyl, substituted C1-C12 alkyl, optionally substituted C2 - C12 alkenyl, optionally substituted C2-C12 alkinyl, optionally substituted C3 - C12 cycloalkyl, optionally substituted C3 - C12 cycloalkenyl, optionally substituted C5 - C16 aryl, optionally substituted C5 - C15 heteroaryl, and optionally substituted 5 to 8 membered heteroaryl.

10. The organogermanium(IV) tricarboxylate compound according to claim 8 or 9, wherein R₄ is -(CH₂)₂-COO-C(O)CH₃.

11. The organogermanium(IV) tricarboxylate compound according to any one of claims 8 to 10, wherein R₅ is -CH₃ or -(CH₂)₁₀-CH₃.

12. The organogermanium(IV) tricarboxylate compound according to any one of claims 8 to 11, wherein R₄ is -(CH₂)₂-COO-C(O)CH₃ and R₅ is -CH₃.

13. Use of a composition according to any one of claims 1 to 7 or of an organogermanium(IV) tricarboxylate compound according to any one of claims 8 to 12 as a catalyst for homogenous and/or heterogeneous catalysis of chemical reactions.

14. The use according to claim 13, wherein the chemical reaction is selected from the group consisting of: (poly)urethane formation, transurethanisation, esterification, ring-opening esterification and polymerization, transesterification, and siloxane-formation.

15. A catalytic system comprising a composition according to any one of claims 1 to 7 and/or at least one organogermanium(IV) tricarboxylate compound according to any one of claims 8 to 12 as a catalytic component.

16. The catalytic system according to claim 15 for use in catalyzing the following chemical reactions selected from the group consisting of: (poly)urethane formation, transurethanisation, esterification, ring-opening esterification and polymerization, transesterification, and siloxane-formation.

17. A method for synthesizing an organogermanium(IV) tricarboxylate compound represented by the following formula (IV):
(R₈)Ge((OOC-R₉)₃) (IV)
wherein R₈ is -(CHR₁₀)ₘ-COO-R₉, the index "m" is zero or is an integer between 1 and 20;
R₉ is selected from the group consisting of: hydrogen, optionally substituted C1 - C18 alkyl, substituted C1-C12 alkyl, optionally substituted C2 - C12 alkenyl, optionally substituted C2-C12 alkinyl, optionally substituted C3 - C12 cycloalkyl, optionally substituted C3 - C12 cycloalkenyl, optionally substituted C5 - C16 aryl, optionally substituted C5 - C15 heteroaryl, and optionally substituted 5 to 8 membered heteroaryl;
R₁₀ is selected from the group consisting of: hydrogen, optionally substituted C1 - C18 alkyl, substituted C1-C12 alkyl, optionally substituted C2 - C12 alkenyl, optionally substituted C2-C12 alkinyl, optionally substituted C3 - C12 cycloalkyl, optionally substituted C3 - C12 cycloalkenyl, optionally substituted C5 - C16 aryl, optionally substituted C5 - C15 heteroaryl, and optionally substituted 5 to 8 membered heteroaryl;
wherein the method comprises the consecutive steps of:
a) dissolving ClOC(CHR₁₀)ₘGeCl₃ in an organic solvent under light exclusion;
b) preparing a suspension by suspending Ag(OOCR₉) or PhNH₃(OOCR₉) as a solid phase in the solution obtained in step a) as a liquid phase and, then, stirring the suspension for 0.5 - 36 hours; to obtain the organogermanium(IV) tricarboxylate compound in the liquid phase;
c) filtering the suspension to separate the solid phase from the liquid phase comprising the organogermanium(IV) tricarboxylate compound; and
d) optionally isolating the organogermanium(IV) tricarboxylate compound from the liquid phase by evaporating the organic solvent and drying the compound in vacuum.

18. A method for synthesizing a polyurethane by reacting an organic polyester polyol or polyether polyol and an organic polyisocyanate in the presence of a catalytic amount at least one catalytic component, and optionally other additives, wherein the catalytic component comprises a composition according to any one of claims 1 to 7 and/or at least one organogermanium(IV)tricarboxylate compound according to any one of claims 8 to 12.
